(19) Europäisches Patentamt
European Patent Office
Office européen des brevets

(11) EP 3 751 315 B1

(12) FASCICULE DE BREVET EUROPEEN

(45) Date de publication et mention de la délivrance du brevet:
30.07.2025 Bulletin 2025/31

(21) Numéro de dépôt: 20179133.2

(22) Date de dépôt: 10.06.2020

(51) Classification Internationale des Brevets (IPC):
G01S 19/50 (2010.01)   B61L 25/02 (2006.01)

(52) Classification Coopérative des Brevets (CPC):
G01S 19/50; B61L 25/025; B61L 2205/04

(54) **PROCEDE ET SYSTEME DE LOCALISATION PONCTUELLE D'UN VEHICULE A L'ARRET SUR UNE VOIE DE GARAGE A L'AIDE DE BALISES VIRTUELLES**

VERFAHREN UND SYSTEM ZUR PUNKTUELLEN LOKALISIERUNG EINES FAHRZEUGS BEIM ANHALTEN AUF EINEM ABSTELLGLEIS MITHILFE VON VIRTUELLEN BALISEN

METHOD AND SYSTEM FOR LOCATING A VEHICLE STOPPED IN A SIDING WITH THE AID OF VIRTUAL BALISES

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 13.06.2019 PCT/FR2019/000096

(43) Date de publication de la demande:
16.12.2020 Bulletin 2020/51

(73) Titulaire: THALES
92190 Meudon (FR)

(72) Inventeur: REVOL, Marc
26120 UPIE (FR)

(74) Mandataire: Atout PI Laplace
Immeuble Up On
25 Boulevard Romain Rolland
CS 40072
75685 Paris Cedex 14 (FR)

(56) Documents cités:
EP-A1- 2 210 791    WO-A1-2013/142946
FR-A1- 3 057 348

**Description**

La présente invention concerne le domaine de la géo-localisation par satellites. L'invention concerne plus particulièrement un procédé et un système de localisation ponctuelle, c'est-à-dire la détermination instantanée ou en temps réel de la position datée, d'un véhicule à l'arrêt, garé sur une voie de garage parmi un ensemble de voies de garage à l'aide de balises virtuelles.

La présente invention concerne également un dispositif de localisation ponctuelle d'un véhicule, garé et à l'arrêt sur une voie de garage, intégré dans le système de localisation ponctuelle selon l'invention, et concerne un produit de programme informatique, à exécuter ou exécuté par ledit dispositif de localisation ponctuelle.

La présente invention s'applique à tout véhicule ou moyen de locomotion, garé à l'arrêt sur une voie de garage.

De manière connue, la détermination de la voie de garage et/ou de départ d'un train à l'arrêt, après son démarrage à froid, i.e. le démarrage ou la préparation de ses équipements électriques et électroniques embarqués, représente un enjeu important pour la localisation du train, aucune information a priori concernant la position de garage dudit train n'étant disponible lors du démarrage à froid du train à l'arrêt. En effet, une fois déterminée la voie de départ du train, la localisation du train peut être mise en œuvre et entretenue lors des déplacements ultérieurs dudit train à l'aide de capteurs proprioceptifs, comme par exemple des odomètres et/ou une centrale inertielle, et du plan de voies.

Classiquement, l'utilisation de contacteurs placés sur chacune des voies de garage ou de balises RFID (en anglais « Radio Frequency IDentification ») dans le cadre du standard ETCS L2 (en anglais « European Train Control System Level 2 ») permet de lever le doute sur le tronçon de voie de garage après déplacement à faible vitesse du train, et ce de façon quasi déterministe.

Les balises RFID, dont les positions sur l'ensemble des voies de garage sont connues, permettent d'activer, lors du passage du train, un signal RFID qui est détecté et daté par un dispositif de positionnement embarqué, et utilisé pour le recalage précis, au mètre près et avec une intégrité élevée, des autres moyens de localisation bord, comme par exemple l'odométrie.

L'inconvénient de l'utilisation de contacteurs ou de balises RFID pour ce système de localisation ponctuelle est le fait qu'un tel système constitue une charge d'infrastructure importante, en termes du nombre nécessaire de balises RFID posées sur les voies de garage et d'entretien desdites balises posées. Un autre inconvénient est le fait qu'avant d'avoir pu être localisé par une balise RFID ou un contacteur, le train doit initialiser un déplacement « en aveugle » à très faible vitesse, qui implique une autorisation préalable des autorités de gestion du trafic.

Par ailleurs, des solutions connues à base de récepteur standard GNSS (en anglais « Global Navigation Satellite System ») sont souvent envisagées pour contribuer à un premier niveau de localisation avec une précision granulaire « à la voie » suffisante pour identifier la voie de garage la plus proche de la position estimée.

De nombreux documents, comme par exemple un premier document US 5 375 059 A, décrivent des systèmes et des procédés d'amélioration de la précision de localisation en temps réel d'un véhicule autonome terrestre qui utilisent un système de positionnement global par satellites et un ensemble de balises.

Cependant, la présence toujours possible de déformations du signal reçu liées à des trajets multiples, ou à des interférences locales, le train étant à l'arrêt, peut induire des erreurs de position bien supérieures à l'espacement entre voies, risquant ainsi de rendre la détermination de la voie non intègre, même après une intégration, longue en termes de durée d'intégration, de la position calculée.

De manière générale, les principales limitations connues, liées à l'utilisation d'une approche standard GNSS, sont les suivantes :

- la disponibilité des signaux GNSS peut ne pas être suffisante dans le cas de véhicules terrestres garés au sol, pour des raisons de masquage des signaux, ou d'indisponibilité des signaux satellites ; et/ou

- la qualité des mesures peut être dégradée sous la forme d'un bais de mesure par l'effet de perturbations de propagation, comme par exemple des trajets multiples ou des interférences locales dans l'environnement de réception ; et/ou

- la précision et l'intégrité des mesures de localisation peuvent être sensiblement moins bonne que celle fournie par un balise physique plus robuste, et ne permet pas d'atteindre les objectifs de sécurité attendus pour la circulation ferroviaire, en particulier ceux concernant une intégrité de la position fournie de niveau 4 SIL4 (en anglais « Safety Integrity Level 4 ») tel que défini dans la norme IEC-61508.

Un premier problème technique est donc de fournir un procédé et un système de localisation ponctuelle d'un véhicule, à l'arrêt sur une voie de garage, à l'aide d'une balise virtuelle associée à ladite voie de départ que l'on cherche à identifier avant le départ, qui permettent, par la seule utilisation des mesures fournies par un récepteur GNSS standard, d'identifier avec un niveau sécuritaire d'intégrité élevé la voie de départ sur laquelle se trouve le train garé parmi un ensemble de voies de départ, proches l'une de l'autre, après le démarrage du train à l'arrêt sur ladite voie de départ.

Un deuxième problème technique est de fournir un procédé et un système de localisation ponctuelle d'un véhicule, à l'arrêt sur une voie de garage, à l'aide d'une balise virtuelle associée à ladite voie de départ que l'on cherche à identifier avant le départ, qui permettent, par la seule utilisation des mesures fournies par un récepteur GNSS standard, d'identifier la voie de départ sur laquelle se trouve le train garé parmi un ensemble de voies de départ, proches l'une de l'autre, et qui garantissent des performances d'intégrité élevée et de robustesse élevée vis-à-vis de l'effet de perturbations de propagation ou d'interférences locales dans l'environnement de réception.

A cet effet, l'invention a pour objet un procédé de localisation ponctuelle d'un véhicule à l'arrêt sur une voie de garage parmi un ensemble de voies de garage à l'aide de balises virtuelles.

Le procédé de localisation est mis en œuvre par un système de localisation ponctuelle comprenant : un récepteur GNSS, embarqué à bord du véhicule, apte à mesurer directement des pseudo-distances calées sur une base de temps locale synchronisée dans une plage temporelle d'imprécision de synchronisation, à l'aide de signaux de géo-positionnement émis par des satellites de géo-positionnement GNSS en visibilité dudit récepteur GNSS ; et un calculateur électronique de traitement, externe au ou intégré dans le récepteur GNSS.

Le procédé de localisation ponctuelle est caractérisé en ce qu'il comprend un ensemble d'étapes dans lequel la vraisemblance de plusieurs hypothèses de localisation à l'arrêt du véhicule) correspondant à un premier ensemble d'un nombre entier NBe de balises virtuelles Be(i) prédéterminées, i variant de 1 à NBe, dont les positions respectives sont connues à raison d'au moins une balise virtuelle par voie de garage, est déterminée et comparée par le calculateur électronique en corrélant des signaux de géo-positionnement GNSS, reçus à différents instants d'un deuxième ensemble par le récepteur GNSS embarqué à bord du véhicule, avec des signaux de géo-positionnement GNSS prédits de répliques attendues pour lesdites différentes positions des balises virtuelles Be(i) du premier ensemble aux différents instants, et la position de garage détectée du véhicule est celle qui correspond à la vraisemblance maximale. Dans ce procédé, pour réduire la désadaptation entrainée par une mauvaise synchronisation de la référence de temps local du récepteur GNSS par rapport au temps du système de positionnement global GNSS, une couverture de la plage temporelle d'imprécision de la synchronisation de l'horloge locale est assurée par le calculateur électronique en découpant de manière prédéterminée ladite plage temporelle d'imprécision en sections temporelles, représentées respectivement par des instants ou temps de recalage tk de synchronisation, k variant de 1 à Nk, avec Nk désignant le nombre d'instants de recalage de synchronisation dans la plage temporelle d'imprécision, les corrélations des signaux de géo-positionnement GNSS reçus par le récepteur GNSS (182) embarqué étant effectuées auxdits temps de recalage tk de synchronisation.

Suivant des modes particuliers de réalisation, le procédé de localisation ponctuelle d'un véhicule comprend l'une ou plusieurs des caractéristiques suivantes, prises isolément ou en combinaison :

- les corrélations des signaux de géo-positionnement GNSS reçus par le récepteur GNSS embarqué en les différentes positions P(i) des balises virtuelles Be(i), i variant de 1 à NBe, et aux différents instants tk, k variant de 1 à Nk, sont des corrélations multi-satellites avec les signaux de répliques GNSS correspondantes attendues en chaque position P(i) à l'instant tk et provenant des satellites Sat(i,j, k) visibles depuis ladite position P(i) de la balise virtuelle Be(i) à l'instant tk, la corrélation multi-satellites en la position P(i) à l'instant de recalage de synchronisation tk, i variant de 1 à NBe et k variant de 1 à Nk, étant égale à la somme quadratique sur l'ensemble des satellites visibles depuis la position P(i) à l'instant de recalage tk, des corrélations élémentaires entre le signal GNSS réel reçu en la position P(i) à l'instant tk par le récepteur GNSS et les répliques GNSS attendues à l'instant tk à la position Pi en provenance des satellites visibles Sat(i, j, k) depuis la balise Be(i) à l'instant tk ;

- l'ensemble des étapes comprend une phase d'initialisation, une phase de recherche de la position de la balise virtuelle la plus proche de la position de garage du véhicule suivant une stratégie prédéterminée, et une phase d'exploitation de la phase de recherche dans laquelle la voie de garage Vi0 est identifiée a partir de la balise virtuelle B(ei0) estimée la plus proche du véhicule, et la connaissance a priori des positions P(i) des balises virtuelles Be(i), fixées et prédéterminées, i variant de 1 à NBe ;

- la phase d'initialisation de l'ensemble des étapes comporte une première étape d'initialisation au cours de laquelle le premier ensemble des positions possibles P(i) des balises virtuelles Be(i), i variant de 1 à NBe, correspondant aux voies Vi de garage possibles du véhicule, est déterminé à partir d'une base de données topographiques qui peut être externe au récepteur GNSS ou qui peut être incluse dans une mémoire de base du récepteur GNSS, et des temps de recalage de synchronisation tk, k variant de 1 à Nk, formant un deuxième ensemble d'hypothèses, sont déterminées dans la plage temporelle d'imprécision de synchronisation en étant espacés sensiblement régulièrement, Nk étant un entier supérieur ou égal à 3, la plage temporelle d'imprécision de synchronisation étant incluse dans le domaine de corrélation temporelle d'une séquence de code PRN GNSS ou étant déterminée à l'aide d'un rayon temporel de protection d'intégrité, calculé à partir des données temporelles d'une fonction RAIM, intégrée dans ou externe au récepteur GNSS ;

- l'écart entre la position réelle du récepteur GNSS le long de la voie de garage sur laquelle le véhicule est garé et la position de la balise virtuelle associée est inférieur à un intervalle spatial d'imprécision dont l'effet temporel équivalent sur la précision de corrélation temporelle est nettement inférieur au domaine de corrélation temporelle de la séquence de code PRN GNSS utilisé ;

- la phase de recherche de la balise virtuelle la plus proche comporte une deuxième étape au cours de laquelle le récepteur GNSS embarqué reçoit les signaux GNSS réels aux instants de recalage de synchronisation tk, k variant de 1 à Nk ; et le calculateur électronique détermine pour chaque instant tk de recalage de synchronisation tk du deuxième ensemble d'hypothèses, k variant de 1 à Nk, et pour chaque position possible P(i) de balise virtuelle Be(i) du premier ensemble, i variant de 1 à NBe, du premier ensemble les signaux de répliques GNSS attendus par le récepteur GNSS aux positions P(i) et temps tk pour chaque satellite visible Sat(,i, j, k) au temps local tk du récepteur, i variant de 1 à NBe et k variant de 1 à Nk ; puis pour chaque instant de recalage tk de deuxième ensemble et pour chaque position P(i) des balises virtuelles du premier ensemble, le calculateur électronique détermine des corrélations élémentaires entre d'une part les signaux des répliques GNSS attendus aux différentes positions de garage P(i) et différents temps de recalage de synchronisation tk et en provenance des différents satellites visibles à chaque instant tk et les signaux réels GNSS reçus aux instants de recalage de synchronisation tk par le récepteur GNSS embarqué du véhicule ;

- la phase de recherche de la balise virtuelle la plus proche du véhicule comporte une troisième étape, exécutée après ou en parallèle de la deuxième étape au cours de laquelle pour chaque instant de recalage tk du deuxième ensemble et pour chaque position P(i) des balises virtuelles du premier ensemble, le calculateur électronique détermine des corrélations multi-satellites, formant une valeur de la fonction de vraisemblance, et égale, pour chaque position P(i) des balises virtuelles du premier ensemble et chaque instant de recalage tk du deuxième ensemble, à la somme quadratique des corrélations élémentaires entre le signal entre le signal GNSS reçu par le récepteur GNSS à l'instant tk et les signaux des répliques attendues à l'instant tk en la positon P(i) de la balise virtuelle en provenance des satellites visibles Sat(, i, j, k) visibles depuis la position P(i) à l'instant tk ;

- la phase de recherche de la balise virtuelle la plus proche comporte une quatrième étape, exécutée après la troisième étape au cours de laquelle le calculateur électronique détermine la position P(i0) de la balise virtuelle et le temps de recalage tk0 qui maximise la fonction de vraisemblance sur le premier ensemble des positions P(i) et le deuxième ensemble des temps de recalage tk, la position P(i0) ainsi déterminée étant la position de la balisé virtuelle Be(i0) détectée la plus proche du récepteur embarqué ;

- le procédé de localisation ponctuelle comprend en outre une cinquième étape, exécutée après la quatrième étape, dans laquelle le calculateur électronique identifie la voie de garage sur laquelle se trouve à l'arrêt le véhicule à partir de la position P(i0) de la balise virtuelle détectée la plus proche et d'une table de correspondance entre l'ensemble des balises virtuelles et l'ensemble des voies de garage ; et/ou le calculateur électronique fournit l'information de temps de recalage de synchronisation détectée tk0 à un mécanisme de correction d'une dérive de l'horloge locale du détecteur GNSS ; et/ou le calculateur électronique lève une alarme en cas d'échec d'identification de la voie de garage et relance une exploration dans un domaine temporel d'imprécision de synchronisation plus étendu ;

- pour chaque position (Pi) de balise virtuelle, l'ensemble des satellites visibles à un instant donné tk depuis toutes les balises virtuelles Be(i), i variant de 1 à NBe, est identique en étant indépendant de l'indice i de parcours des balises virtuelles et fonction du temps tk seulement ;

- l'intégrité de la localisation est contrôlée par une étape supplémentaire dans laquelle il est vérifié que la vraisemblance maximale est supérieure à un seuil de sécurité prédéterminé garantissant l'intégrité de la localisation.

L'invention a également pour objet un dispositif de localisation ponctuelle d'un véhicule à l'arrêt sur une voie de garage parmi un ensemble de voies de garage à l'aide de balises virtuelles, comprenant : un récepteur GNSS, embarqué à bord du véhicule, apte à mesurer directement des pseudo-distances calées sur une base de temps locale synchronisée dans une plage temporelle de précision, à l'aide de signaux de géo-positionnement émis par des satellites de géo-positionnement GNSS en visibilité dudit récepteur ; et un calculateur électronique de traitement, externe au ou intégré dans le récepteur GNSS.

Le dispositif de localisation ponctuelle est caractérisé en ce que le calculateur électronique est configuré pour : déterminer et comparer la vraisemblance de plusieurs hypothèses de localisation à l'arrêt du véhicule, correspondant à une premier ensemble d'un nombre entier NBe balises virtuelles Be(i) prédéterminées, i variant de 1 à NBe, dont les positions respectives sont connues à raison d'au moins une balise virtuelle par voie de garage, en corrélant des signaux de géo-positionnement GNSS reçus à différents instants d'un deuxième ensemble par le récepteur GNSS embarqué à bord du véhicule avec des signaux de géo-positionnement GNSS prédits de répliques attendues pour lesdites différentes positions des balises virtuelles du premier ensemble aux différents instants ; et détecter la position actuelle de garage du véhicule comme celle correspondant à la vraisemblance maximale. Dans ce dispositif, pour réduire la désadaptation entraînée par une mauvaise synchronisation de la référence de temps local du récepteur GNSS par rapport au temps du système de positionnement global GNSS, le calculateur électronique est configuré pour assurer une couverture de la plage temporelle d'imprécision de l'horloge locale en découpant de manière prédéterminée ladite plage temporelle d'imprécision en sections temporelles, représentées respectivement par des instants ou temps de recalage tk de synchronisation, k variant de 1 à Nk, avec Nk désignant le nombre d'instants de recalage de synchronisation dans la plage temporelle d'imprécision.

Suivant des modes particuliers de réalisation, le dispositif de localisation ponctuelle d'un véhicule comprend l'une ou plusieurs des caractéristiques suivantes, prises isolément ou en combinaison :

-    les corrélations des signaux de géo-positionnement GNSS reçus par le récepteur GNSS embarqué étant effectuées auxdits temps de recalage tk de synchronisation ; et les corrélations des signaux de géo-positionnement GNSS reçus par le récepteur GNSS embarqué en les différentes positions P(i) des balises virtuelles Be(i), i variant de 1 à NBe, et aux différents instants tk, k variant de 1 à Nk, sont des corrélations multi-satellites avec les signaux de répliques GNSS correspondantes attendues en chaque position P(i) à l'instant tk et provenant des satellites Sat(i,j, k) visibles depuis ladite position P(i) de la balise virtuelle Be(i) à l'instant tk, la corrélation multi-satellites en la position P(i) à l'instant de recalage de synchronisation tk, i variant de 1 à NBe et k variant de 1 à Nk, étant égale à la somme quadratique sur l'ensemble des satellites visibles depuis la position P(i) à l'instant de recalage tk, des corrélations élémentaires entre le signal GNSS réel reçu en la position P(i) à l'instant tk par le récepteur GNSS et les répliques GNNS attendues à l'instant tk à la position Pi en provenance des satellites visibles Sat(i, j, k) depuis la balise Be(i) à l'instant tk ;

-    le calculateur électronique est configuré pour déterminer la plage temporelle d'imprécision de synchronisation en l'incluant dans le domaine de corrélation temporelle d'une séquence de code PRN GNSS ou en calculant un rayon temporel de protection d'intégrité à partir des données temporelles d'une fonction RAIM, la fonction RAIM étant intégrée dans ou externe au récepteur GNSS.

L'invention a également pour objet un dispositif de localisation ponctuelle d'un véhicule à l'arrêt sur une voie de garage parmi un ensemble de voies de garage à l'aide de balises virtuelles, comprenant un système GNSS de géo-positionnement global par satellites ; et un dispositif de localisation ponctuelle d'un véhicule tel que défini selon ci-dessus, de préférence augmenté par une fonction RAIM implémenté au sein du récepteur GNSS ou d'un deuxième récepteur GNSS séparé du premier récepteur GNSS ; le véhicule étant un véhicule terrestre, garé sur une voie terrestre de garage, de manière préférée un train garé sur une voie de garage ferroviaire, ou un véhicule maritime, garé sur une voie maritime.

L'invention a également pour objet un produit de programme informatique comprenant des instructions lisibles par ordinateur qui, lorsqu'elles sont exécutées sur un processeur, amènent le processeur à exécuter le procédé de localisation, tel que décrit ci-dessus, d'un véhicule à l'arrêt sur une voie de garage parmi un ensemble de voies de garage à l'aide de balises virtuelles.

L'invention sera mieux comprise à la lecture de la description de plusieurs formes de réalisation qui va suivre, donnée uniquement à titre d'exemple et faite en se référant aux dessins sur lesquels :

[Fig 1] illustre la relation entre la corrélation temporelle et la corrélation spatiale ;

[Fig. 2] est une vue de l'architecture générale d'un système selon l'invention de localisation ponctuelle d'un véhicule à l'arrêt, ici un train garé sur une voie de garage et de départ d'un ensemble de voies de garage et de départ dont on connait la topographie ;

[Fig. 3] est un ordinogramme général d'un procédé selon l'invention de localisation ponctuelle d'un véhicule à l'arrêt, ici un train garé sur une voie de garage et de départ d'un ensemble de voies de garage et de départ dont on connait la topographie, ledit procédé de localisation ponctuelle étant mis en œuvre par le système de localisation ponctuelle de la Figure 2 ;

[Fig. 4] est un ordinogramme d'un premier mode particulier de réalisation du procédé de localisation ponctuelle du train de la Figure 3 ;

[Fig. 5] est un ordinogramme d'un deuxième mode particulier de réalisation du procédé de localisation ponctuelle du train de la Figure 3 ;

[Fig. 6] est une vue partielle de l'architecture modulaire d'un système permettant la mise en œuvre du procédé de localisation ponctuelle selon le deuxième mode de réalisation de la Figure 5 ;

[Fig. 7] est une vue graphique d'un exemple de fonction de détection ou de corrélation multi-satellites résultante obtenue après sommation quadratique des sorties de filtrage adapté ou des fonctions de corrélation élémentaires satellites à différentes incidences de visibilité de satellites.

L'objectif général du procédé et du système selon l'invention de localisation d'un véhicule terrestre, par exemple un train, garé à l'arrêt sur une voie de garage, est de rendre possible la comparaison de la vraisemblance de plusieurs hypothèses de localisation au démarrage du train, lesdites hypothèses de localisation correspondant à des positions de stationnement ou de garage prédéterminées et connues, en vérifiant la cohérence ou en corrélant des signaux GNSS reçus par un récepteur standard GNSS embarqué à bord du train avec les signaux GNSS prédits de répliques attendues pour ces différentes positions.

Les positions de garage des trains pour chaque voie de départ sont supposées suffisamment précises pour garantir un positionnement du récepteur GNSS embarqué à un niveau de garage au mètre près relativement à un repère visuel, qui est disposé le long de la voie de départ et qui correspond à une unique balise virtuelle de ladite voie de départ.

Toutefois, si la position à l'arrêt du train ne peut pas être assurée à mieux du mètre, il conviendra d'évaluer la vraisemblance de chacune des hypothèses de position à l'arrêt dans un intervalle d'incertitude spatiale de longueur supérieure au mètre et d'explorer l'intervalle d'incertitude spatiale sur chacune des voies avec un pas de un mètre.

A l'inverse de l'utilisation de la balise RFID, le procédé et le système de localisation du train selon l'invention ne nécessitent pas que le train se déplace, même à faible vitesse, pour permettre de détecter la voie de garage avant son passage sur les aiguillages de voies.

Dans le cas où la position à l'arrêt du train peut être assurée à mieux du mètre, les positions de réception possibles des signaux GNSS attendus sont données par des positions P(i) de points de garage qui correspondent à des balises virtuelles Be(i) à raison d'une balise virtuelle par voie de garage. Dans ce cas, la balise Be(i) et sa voie de garage Vi associée peuvent être désignée sont numérotés par un indice de numérotation commun i, i variant de 1 à NBe, NBe désignant à la fois dans ce cas particulier le l nombre de balises et le nombre de voies de l'ensemble des voies de garage et de départ possibles sur lesquelles le train peut être garé. Les positions P(i) des balises virtuelles, i variant de 1 à NBe constituent un premier ensemble d'hypothèses de position de garage et de départ du train, et peuvent être évaluées en parallèle et/ou en série en fonction du traitement effectué.

Dans le cas où la position à l'arrêt du train ne peut pas être assurée à mieux du mètre, les positions de réception possibles des signaux GNSS attendus sont données par des positions P(i) de points de garage qui correspondent à des balises virtuelles Be(i) à raison d'au moins une balise virtuelle par voie de garage Vs, s étant un indice de numérotation de la voie de garage et départ variant de 1 à NV et i étant un indice de numérotation de la balise virtuelle Be(i) variant de 1 à NBe, NV désignant le nombre de voies Vs de l'ensemble des voies de garage et de départ possibles sur lesquelles le train peut être garé, et NBe désignant le nombre total de balises virtuelles. En supposant un nombre NBV, supérieur ou égal à 1, de balises virtuelles par voie Vs, espacées consécutivement d'au plus un mètre, l'indice i de numérotation de la balise virtuelle peut varier de 1 à NBe en suivant la relation suivante :

$$i = (s - 1) * NBV + r$$

L'indice s de numérotation de voie de garage variant de 1 à NV et r étant un indice entier de parcours des balises au sein d'une même voie.

Les positions P(i) des balises virtuelles, i variant de 1 à NBe constituent un premier ensemble d'hypothèses de position de garage et de départ du train, et peuvent être évaluées en parallèle et/ou en série en fonction du traitement effectué.

Un premier avantage du procédé de localisation et du système de localisation ponctuelle selon l'invention est de pouvoir tester plusieurs hypothèses de positions possibles P(i) de garage du train en termes de voie de garage, sans avoir à déplacer le train.

Un deuxième avantage du procédé de localisation ponctuelle et du système de localisation ponctuelle selon l'invention par rapport aux procédés et systèmes de localisation classiques, utilisés dans les récepteurs GNSS standards, est le fait de permettre l'établissement d'un rapport de vraisemblance plus robuste qui évalue différentes solutions possibles de voies de garage ou balises virtuelles sur la base de critères linéaires purement énergétiques, sans avoir à faire appel à des estimateurs de temps d'arrivée comme ceux implémentés classiquement sur les récepteurs GNSS, qui deviennent non linéaires en présence de distorsions sur la forme d'onde du signal reçu GNSS, causées par des trajets multiples ou diverses interférences.

Un troisième avantage du procédé de localisation et du système de localisation ponctuelle selon l'invention est le fait de pouvoir réduire l'estimation à la seule dimension spatiale, en faisant abstraction du temps qui lui est prédéfini a priori par un ensemble de tranches temporelles de découpe de l'intervalle d'imprécision de l'horloge locale par rapport à l'horloge du système GNSS, et dont la largeur, suffisamment réduite, permet, lors de l'estimation de la position de la voie de départ sur laquelle se trouve le train, de rendre la contribution de l'indétermination temporelle à l'indétermination de l'estimation conjointe de position, négligeable devant la contribution de l'indétermination spatiale de la position réelle du train par rapport à la position du train sur la voie.

Par la suite, on appellera « balise virtuelle » une position prédéterminée, ou point de référence, dont on connait précisément les coordonnées spatiales.

Par la suite on entend par "temps courant" ou « temps actuel » le temps t̲ mesuré par la base de temps locale du récepteur GNSS standard, inclus dans le dispositif de localisation selon l'invention.

Par la suite on entend par « temps de recalage de synchronisation » de rang k, k étant un entier compris entre 1 et Nk, un instant compris dans la k-ième section de couverture de la plage temporelle d'imprécision de la synchronisation de l'horloge locale du récepteur GNSS standard.

Un système de positionnement par satellites GNSS (en anglais « Global Navigation Satellite System » désigne par exemple le système GPS (en anglais « Global Positioning System »), le système Galileo, le système Glonass ou tout autre système équivalent.

Pour rappel le code d'acquisition C/A (pour « *Coarse Acquisition»* ou acquisition grossière) dans le cas GPS est un signal numérique composé de 1023 chips et qui se répète toutes les millisecondes. Il est à remarquer que le terme « chip » utilisé dans les techniques GNSS est à différencier du terme « bit » qui est utilisé pour définir une unité d'information.

Le concept de l'invention, suivant un premier aspect, est fondé sur la mise en œuvre conjointe :

-  d'une comparaison d'une fonction de vraisemblance d'un nombre entier NBe restreint fixé de positions P(i), i variant de 1 à NBe, de stationnement prédéterminées et connues, correspondantes aux balises virtuelles Be(i) ; et

-  d'un cœur d'algorithme de traitement par corrélation multi-satellites à différentes inclinaisons, tel que défini dans un deuxième document EP 3 306 272 A1, et qui vérifie la cohérence des signaux GNSS reçus par le récepteur GNSS embarqués avec les signaux GNSS attendus pour les différentes hypothèses de positions P(i) du train sur les voies de départ Vi correspondante.

A l'inverse des procédés et systèmes classiques de localisation, qui utilisent un récepteur GNSS standard embarqué dans un véhicule à l'arrêt et une estimation directe de la position, et qui présentent de ce fait des risques de défaut d'intégrité importants de la position estimée, d'autant plus élevés que le train est à l'arrêt et que le récepteur GNSS subit la réception de trajets multiples très lentement variables et d'interférences locales, le procédé et le système de localisation ponctuelle selon l'invention met en œuvre un filtrage multi-satellite, i.e. multidimensionnel sur tous les axes de vue des satellites visibles et adapté par rapport à des positions d'un premier ensemble de positions prédéterminées P(i) de balises virtuelles et des temps reçus tk d'un deuxième ensemble de temps prédéterminés de recalage possibles de la synchronisation entre la base de temps local et la base de temps du système GNSS.

En effet, suivant la « stratégie de recherche » du procédé de localisation ponctuelle de l'invention, l'énergie de l'estimateur de localisation, i.e. l'amplitude de la somme quadratique des amplitudes des corrélateurs élémentaires associés respectivement aux satellites visibles exploitables, est maximisée pour les différentes hypothèses de garage du train, c'est à dire sur le premier ensemble des positions Pi des balises virtuelle Be(i), i variant de 1 à Nbe, le train étant supposé à l'arrêt.

Suivant un premier aspect du concept de l'invention, le filtrage multi-satellites ou multidimensionnel adapté est réalisé par corrélation des signaux GNSS reçus par le récepteur GNSS avec les signaux des répliques attendus à un instant de réception courant t̲ sur les points spatiaux Pi correspondant aux positions possibles de stationnement du récepteur GNSS, i.e. les positions des balises virtuelles Bei, i variant de 1 à Nbe. Le code du signal de réplique local reçu par le terminal GNSS à l'instant de réception courant étant basé sur une émission à phase fixe depuis le ou les satellites visibles, la phase de réception du signal de réplique attendu à l'instant de réception courant t̲ est ajustée en fonction du mouvement dudit satellite dont la trajectoire est calculée selon des éphémérides et des différentes hypothèses de positions P(i) et de la date de réception courante t, la base de temps du récepteur GNSS étant supposée synchronisée préalablement par un calcul classique de PVT (Position-Vitesse-Temps) dont l'imprécision est définie par un intervalle temporel d'imprécision, de largeur égale pour un récepteur GNSS classique, de type GPS par exemple, à quelques centaines de nanosecondes. En pratique, l'incertitude sur l'estimation du temps GNSS réfère aux mêmes imperfections, c'est-à-dire aux mêmes biais que les incertitudes d'estimation de la position en présence de trajets multiples ou d'interférences. Le procédé de localisation selon l'invention permet de réduire cette incertitude en proposant exploration du domaine en utilisant une méthode d'estimation non affectée par ces premiers défauts de mesures.

En supposant une synchronisation parfaite entre la base de temps local du récepteur GNSS et la base de temps du système GNSS, la phase du signal GNSS effectivement reçue par le récepteur GNSS évolue de son côté naturellement avec le temps en fonction de la position fixée de la balise virtuelle associée à la voie de garage ; une parfaite adaptation et maximisation de la fonction de vraisemblance existe alors et se maintient dans le temps lorsque la phase du signal reçu réellement et localement correspond à la phase des signaux de répliques attendues pour la position de garage sur laquelle se trouve le récepteur GNSS.

Toutefois dans la pratique, une telle cohérence entre les signaux réels GNSS reçus par le récepteur GNSS au temps t̲ courant et les signaux de répliques attendus, prédits et calculés, aux différentes positions P(i) de garage, i variant de 1 à NBe, ne peut pas être parfaitement assurée, ne serait-ce qu'en raison :

- de l'erreur de synchronisation du temps local du récepteur GNSS sur le temps du système GNSS qui comporte nécessairement une imprécision d'estimation, voire une instabilité au cours du temps, causée par la l'imprécision intrinsèque de la base de temps local du récepteur GNSS (par exemple un quartz oscillant compensé en température), plus élevée que l'imprécision de la base de temps du système GNSS (en général une horloge atomique conforme aux contraintes de vol spatial) ;
- des erreurs propres au système GNSS et des erreurs de propagation des signaux radioélectriques qui ne sont pas parfaitement corrigées par les divers modèles de compensation, comme par exemple les erreurs de propagations ionosphérique et/ou troposphérique, les effets de bras de levier d'antenne, les erreurs d'éphémérides et de synchronisation temporelle entre les satellites.

Il est à remarquer que les erreurs résiduelles de propagation après compensation par les modèles qui sont de l'ordre de quelques mètres n'impactent que faiblement le niveau de la fonction de corrélation spatiale ; par exemple, le support de corrélation spatiale a une longueur de 300 mètres dans un mode de signal C/A (en anglais « Coarse / Acquisition ») de système GPS, et ces erreurs résiduelles de propagation varient peu sur la durée du démarrage du train à l'arrêt, inférieure ou égale à 10 minutes, et n'introduisent pas de bruit ou de biais supplémentaire sur la détermination du maximum de corrélation spatiale, selon les diverses positions P(i) possibles de garage du train.

En conséquence, seule une imprécision de synchronisation de la base de temps locale du récepteur GNSS vis-à-vis du temps du système GNSS pourrait conduire à une perte de sensibilité significative de la localisation ponctuelle du train, si l'écart de synchronisation entre la base de temps locale du récepteur GNSS et le temps du système GNSS devient plus grand que la durée d'un chip d'un code pseudo-aléatoire GNSS, par exemple égale à $1\mu s$ dans le cas d'un code C/A GPS.

Pour pallier cette imprécision de synchronisation et suivant un deuxième aspect, le concept de l'invention est fondé sur un recalage de la synchronisation temporelle, en mettant en œuvre la recherche du maximum de corrélation spatiale aux différentes positions P(i) de garage pour plusieurs temps différents de réception locaux $\underline{tk}$ d'un même deuxième ensemble de temps de synchronisation, dispersés sur un intervalle temporel de recalage de la synchronisation, centré sur un temps de synchronisation résolu de référence, de sorte à échantillonner l'incertitude résiduelle sur le temps résolu. A titre d'exemple, dans le cas d'un code C/A d'une séquence GPS, un intervalle de recalage de la synchronisation, de

largeur égale à $1\mu s$, pourrait être exploré en étant échantillonné au pas de $0.2\ \mu s$.

Ainsi, par la mise en parallèle de plusieurs filtrages multidimensionnels en termes de satellites visibles et de leurs angles d'incidence, adaptés en termes de répliques prédites des signaux reçus aux différentes positions de garage possibles du train, et calculés pour différents hypothèses de recalage du temps local le domaine d'incertitude en temps, l'imprécision sur la synchronisation locale est couverte et la voie de départ sur laquelle se trouve le train à l'arrêt peut être identifiée.

Il est à remarquer que parmi les approches possibles pour déterminer la taille du domaine d'incertitude temporelle, c'est-à-dire l'intervalle de la synchronisation temporelle à prendre en compte, une approche consiste à calculer un rayon temporel de protection de la mesure de temps à partir de l'information temporelle de la fonction RAIM (en anglais « Receiver Autonomous Integrity », bien connue des systèmes GNSS) qui permet de détecter les biais (i.e les erreurs) de mesures d'axe à vue satellite susceptibles de dépasser un rayon temporel maximal de protection ou rayon d'alarme correspondant à une la détection d'un défaut d'intégrité du système GNSS.

Le domaine d'exploration temporelle ou intervalle de temps de recalage de synchronisation est ainsi borné par le rayon de protection du RAIM. La fonction RAIM garantit avec la confiance souhaitée (en terme de probabilité de non détection d'erreur Pnd et de probabilité de fausse alarme Pfa) la détection de toute erreur par axe à vue satellite qui conduirait à une erreur sur le temps supérieure à ce rayon de protection, contrairement à la seule précision de mesure de temps qui suppose une absence d'erreur de mesures sur les axes à vue satellites, c'est-à-dire une absence de défaut d'intégrité du système GNSS (panne d'au moins un satellite). Ce rayon de protection, calculé à chaque époque de mesure (typiquement chaque seconde), est supposé suffisamment stable pour permettre l'exploration du domaine de temps.

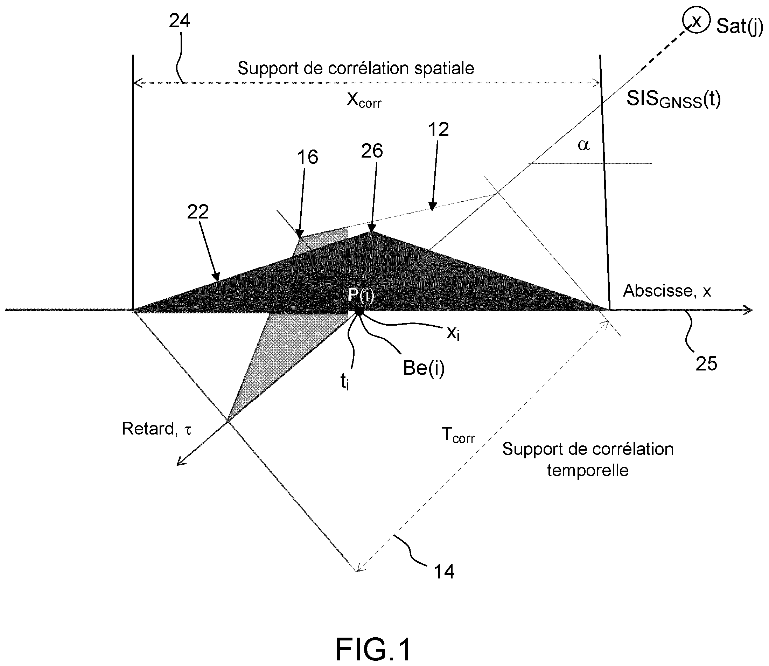

La Figure 1 illustre l'équivalence entre la synchronisation en temps par corrélation temporelle et la synchronisation en position par corrélation spatiale. Cette figure présente une représentation graphique, en fonction du temps, d'une fonction de corrélation temporelle 12 du signal GNSS reçu $SIS_{GNSS}(t)$ par un récepteur GNSS d'un satellite de géo-positionnement Sat(j) avec le signal attendu en un point d'abscisse Xi de balise Be(i) et à un instant de synchronisation ti.

Le support $T_{corr}$ 14 de cette fonction de corrélation temporelle 12 correspond à la durée d'un chip d'une séquence de code GNSS. Le terme « chip », utilisé dans les techniques GNSS, désigne une information binaire modulant le signal d'une séquence de code GNSS et diffère de la notion de bit qui est utilisée pour définir une unité d'information. Par exemple, la durée d'un chip pour le système GPS (en anglais « Global Positioning System »). Le maximum 16 de cette fonction de corrélation temporelle 12 est obtenu à l'instant de synchronisation ti du signal attendu avec le signal GNSS $SIS_{GNSS}(ti)$ reçu par le récepteur GNSS.

La Figure 1 présente également une représentation graphique unidimensionnelle, en fonction de l'abscisse X autour de la position P(i) associé à la balise virtuelle Be(i), d'une fonction de corrélation spatiale 22 équivalente du signal GNSS reçu par le récepteur en provenance du satellite de géo-positionnement Sat(j) avec le signal attendu en le point Be(i) d'abscisse Xi et au temps de synchronisation ti à la position Xi de la balise virtuelle Be(i).

Le support $X_{corr}$ 24 de cette fonction de corrélation spatiale 22 correspond à la projection du support 14 de corrélation temporelle $T_{corr}$ sur un axe 25 de variation de la position du récepteur GNSS autour de la balise virtuelle Be(i). Le support de corrélation spatiale $X_{corr}$ et le support de corrélation temporelle $T_{corr}$ sont liés par la formule :

$$X_{corr} = c^* \, T_{corr}/\cos(\alpha j)$$

dans laquelle :

- $X_{corr}$ désigne ici la longueur du support de la fonction de corrélation spatiale ;

- c désigne la célérité de la lumière ;

- $\alpha j$ désigne l'angle d'incidence du signal satellite émis par le satellite Sat(j), j étant compris entre 1 et NSat par rapport à la direction de déplacement du véhicule ;

- l'opérateur « $^*$ » représente le signe de la multiplication.

Le maximum 26 de cette fonction de corrélation temporelle 22 correspond à l'abscisse de synchronisation du signal GNSS attendu avec le signal reçu par le récepteur GNSS en provenance du satellite Sat(j), il indique la position la plus proche de la balise virtuelle Be(i). Ici, sur la Figure 1, la synchronisation étant supposée exactement réalisé, le maximum 26 correspond à l'abscisse Xi de la position P(i) de la balise virtuelle Be(i).

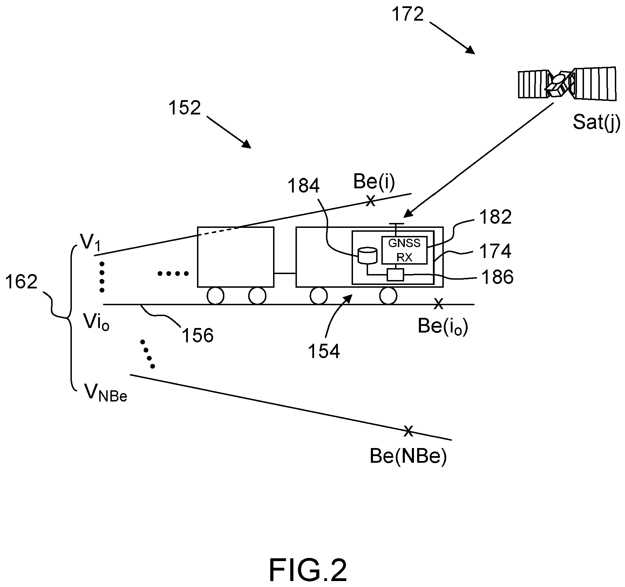

Suivant la Figure 2 et selon l'invention, un système de localisation ponctuelle 152 d'un train 154 à l'arrêt sur une voie de démarrage 156, inconnue a priori du train mais faisant parte d'un ensemble 162 de voies de démarrage Vi, i variant de 1 à NBe, dont la topographie est connue, comprend un système de positionnement global par satellites GNSS 172 et un dispositif de localisation ponctuelle 174 du train et d'identification de la voie de départ sur laquelle ledit train est garé à l'arrêt.

Le dispositif de localisation ponctuelle 174 embarqué comporte un récepteur GNSS standard classique 182 et une base de données topographiques 184, d'enregistrement de la topographie des voies Vi et des positions P(i) de balises virtuelles Be(i ) respectivement associées.

Le dispositif de localisation ponctuelle 174 embarqué comporte également un calculateur électronique de localisation ponctuelle 186, connecté au récepteur GNSS standard 182 ainsi qu'à la base de données topographiques 184.

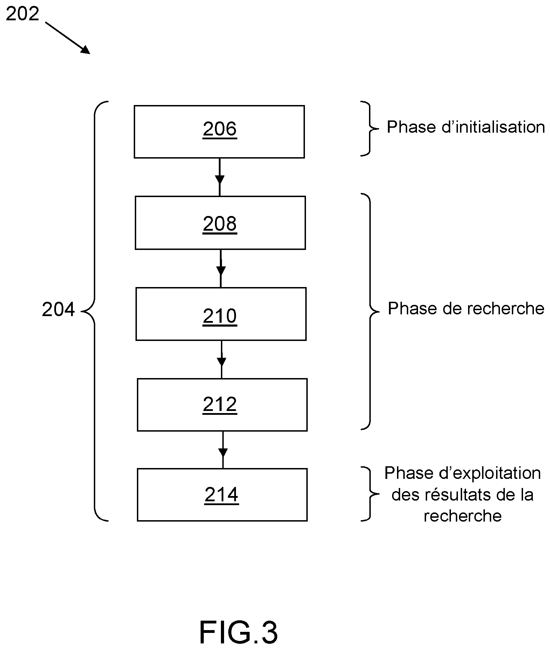

Le dispositif de localisation ponctuelle 174 est configuré pour mettre en œuvre un procédé de localisation ponctuelle 202 décrit de manière générale dans la Figure 3.

Suivant la Figure 3 et le mode de réalisation le plus général du procédé du localisation ponctuelle, le procédé de localisation ponctuelle 202 selon l'invention comprend un ensemble 204 d'étapes, configurées pour mettre en œuvre une stratégie de recherche de la position de la balise virtuelle la mieux adaptée par rapport à la position du train 154, c'est-à-dire encore identifier la balise virtuelle $Be(i_0)$ la plus proche de l'emplacement du récepteur GNSS embarqué à bord du train 154, et par conséquent la voie de démarrage associée Vi0, en exploitant le signal GNSS reçu et la connaissance a priori des positions P(i) des balises virtuelles Be(i), fixées et prédéterminées fournie par la base des données topographiques de l'ensemble 162 des voies de démarrage Vi, i variant de 1 à NBe.

La recherche de la position de balise virtuelle, la mieux adaptée par rapport à la position réelle du train, garé en position de démarrage, et de son récepteur GNSS 182 embarqué, est mise en œuvre par corrélation des signaux GNSS reçus par le récepteur GNSS 182 en provenance des divers satellites visibles Sat(j) avec les signaux de codes répliques attendus de ces divers satellites, générés à la même date $\underline{t}$ de référence locale du récepteur GNSS pour les différentes positions P(i) de balises virtuelles Be(i), i.e. les différentes positions de garage en termes de voie Vi, pour i variant de 1 à NBe.

En outre, pour réduire la désadaptation entrainée par une mauvaise synchronisation de la référence de temps local par rapport au temps système du système de positionnement global GNSS, une couverture du domaine d'incertitude de synchronisation est assurée par un découpage suivant un pas de découpage prédéterminé, en sections temporelles représentées respectivement par des instants de recalage tk, k variant de 1 à Nk avec Nk désignant le nombre d'instants de recalage de synchronisation. Par exemple, pour un domaine d'incertitude ou d'imprécision de synchronisation, inférieur à la durée de 1 $\mu$s, ce qui permet de rester dans le domaine de corrélation temporel d'un code PRN d'une séquence C/A GPS, des pas de durée inférieure ou égale à 200 ps pourront être considérés.

Les différentes positions P(i) de garage sont enregistrées dans la base des données topographiques des balise virtuelles qui peut être externe au récepteur GNSS comme décrit par exemple sur la Figure 2, ou qui peut être incluse dans la mémoire de base du récepteur GNSS.

L'ensemble 204 des étapes du procédé général de localisation ponctuelle 202 d'un train à l'arrêt sur une voie de démarrage d'un ensemble voie de garage comprend une phase d'initialisation incluant une première étape 206, une phase de recherche de balise virtuelle la mieux adaptée incluant des deuxième, troisième, quatrième étapes 208, 210, 212, et une phase d'exploitation des résultats de la recherche incluant une cinquième étape 214.

Dans la première étape 206 d'initialisation, un premier ensemble des positions possibles P(i) des balises virtuelles Be(i), i variant de 1 à NBe, correspondant aux voies Vi de garage possibles du véhicule, ici un train, est déterminé à partir de la base de donnés topographiques. Il est supposé que l'écart entre la position réelle du récepteur GNSS le long d'une voie de garage quelconque du train et la position de la balise virtuelle associée à ladite voie de garage est inférieur à un intervalle d'imprécision spatiale prédéterminée, dont la maîtrise est assurée par contraintes de conduite imposées aux conducteurs dans le garage du train.

Dans la même première étape 206 d'initialisation, des dates de recalages de synchronisation tk, k variant de 1 à Nk, formant un deuxième ensemble de données d'hypothèse, sont déterminées dans une plage temporelle d'imprécision de synchronisation, contenu dans le domaine de corrélation temporelle d'une séquence de code GNSS, Nk étant un entier supérieur ou égal à 3.

Ensuite, dans la deuxième étape 208 de mise en œuvre de la stratégie de recherche de la balise virtuelle la plus proche, le récepteur GNSS embarqué 182 reçoit les signaux réels GNSS aux instants de recalage de synchronisation tk, k variant de 1 à Nk.

Dans la même deuxième étape 208, le calculateur électronique 186, externe au ou intégré dans le récepteur GNSS 182, détermine pour chaque temps ou instant tk de recalage de synchronisation du deuxième ensemble, k variant de 1 à Nk, et chaque position possible P(i) de balise virtuelle Be(i) ou de garage, i variant de 1 à NBe, du premier ensemble, les signaux de répliques GNSS attendus par le récepteur GNSS 182 aux positions P(i) et temps tk, pour chaque satellite visible Sat(i,j,k) depuis la position P(i) au temps local du récepteur tk, i variant de 1 à NBe et k variant de 1 à Nk, j désignant l'indice de parcours de l'ensemble des satellites visibles depuis une position P(i) donnée et un instant tk de recalage de synchronisation donnée.

Dans la même deuxième étape 208, pour chaque instant de recalage tk du deuxième ensemble et pour chaque position P(i) des balises virtuelles du premier ensemble, le calculateur électronique détermine des corrélations élémentaires entre les signaux des répliques GNSS attendus aux différentes positions de garage P(i) et différents temps de recalage de synchronisation tk et différents satellites Sat(i,j,k) visibles à chaque instant tk, et les signaux réels GNSS reçus aux instants de recalage de synchronisation tk par le récepteur GNSS embarqué.

Dans la troisième étape 210, exécutée après ou en parallèle de la deuxième étape 208, et pour chaque instant de recalage tk du deuxième ensemble, le calculateur électronique 186 détermine des corrélations multi-satellites ou vraisemblances comme étant, pour chaque position P(j) des balises virtuelles du premier ensemble et chaque instant de recalage tk du deuxième ensemble, égale à la somme quadratique des corrélations élémentaires entre le signal réel reçu par récepteur GNSS à l'instant tk et les signaux des répliques attendues à l'instant de recalage à la balise virtuelle ayant la position P(i) en provenance des satellites Sat(,i, j, k) visibles depuis la position P(i) à l'instant tk.

Ensuite, dans la quatrième étape 212, le calculateur détermine la position P(i0) de la balise virtuelle Be(i0) et la date de recalage tk0 pour laquelle la corrélation multidimensionnelle ou fonction de vraisemblance est maximale et fournit cette position P(i0) et ce temps de synchronisation tk0 en données de sortie comme étant la position de la balise virtuelle et la correction de synchronisation les plus probables concernant le garage du train.

Dans une cinquième étape 214 optionnelle, consécutive à la quatrième étape 212, le calculateur électronique identifie la voie de garage du train à l'aide de la position de la balise virtuelle déterminée la plus proche du train et une table de correspondance entre l'ensemble des balises virtuelles de garage et l'ensemble des voies de garage.

Il est à remarquer que le rapport signal à bruit de l'estimation de la fonction de corrélation peut être amélioré de façon classique par intégration non cohérente des sorties, et ce sur une durée minimum suffisante pour atteindre la confiance souhaitée sur l'estimation du maximum.

Il est à remarquer que dans le cas où une solution unique ne pourrait se détacher avec suffisamment de confiance (pas de maximum significatif) est révélateur d'un défaut d'intégrité du procédé et une alerte doit être signalée. Toutefois ce défaut peut être lié au fait que l'intervalle d'exploration du temps local n'est pas suffisamment étendu ; il convient alors de reprendre la recherche en élargissant l'intervalle temporel de recherche au-delà du domaine d'incertitude de l'estimation de temps.

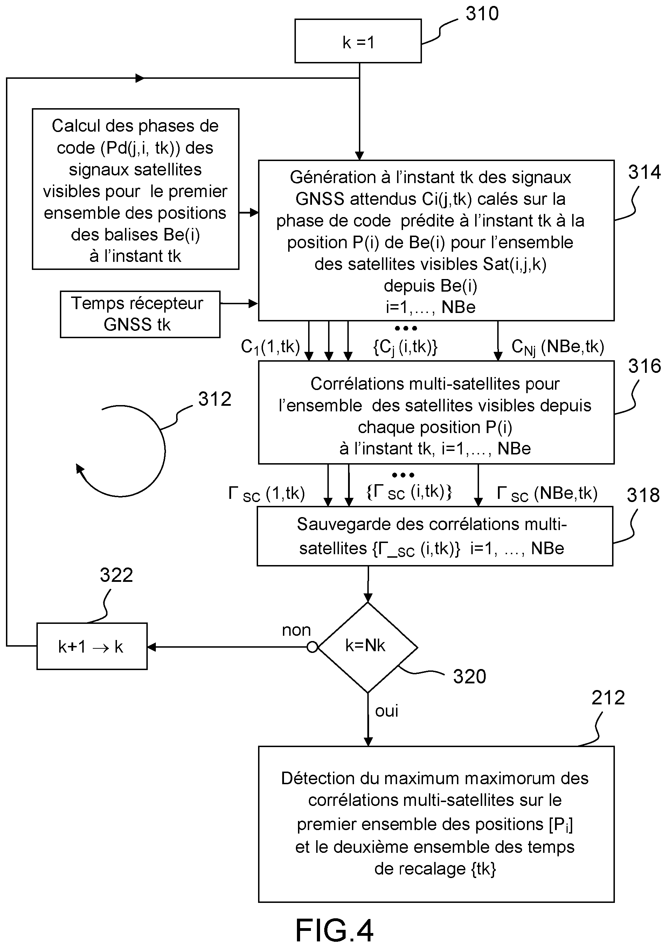

Suivant la Figure 4 et un premier mode particulier 302 de réalisation du procédé de localisation ponctuelle du train de la Figure 3, le procédé de localisation 302 comprend la première étape d'initialisation 206 de la Figure 3, une première boucle 312 de sous-étapes 314, 316, 318, 320, 322 de parcours des temps de recalage tk du deuxième ensemble paramétré par l'indice k variant de 1 à Nk, et la quatrième étape 212 de la Figure 3.

Avant d'exécuter la première boucle 312, l'indice k de parcours des temps de recalage tk est mis à 1 au préalable dans étape d'initialisation 310 du parcours de la première boucle 312.

Dans la première sous-étape 314, k étant fixé, les signaux GNSS de répliques GNSS attendus Ci(j,tk), calés à l'instant tk à la position P(i) de la balise virtuelle Be(i), pour l'ensemble des satellites visibles Sat( i, j, k) depuis la balise virtuelle Be(i) à l'instant tk, sont générés par calcul en parcourant le premier ensemble des balises virtuelles Be(i) au travers de l'indice i variant de 1 à NBe d'une deuxième boucle non représentée. Les phases de répliques GNSS Ci(j,tk) attendus en la balise virtuelle Be(i) à l'instant de recalage tk, désignées respectivement Pd(j, i,tk) pour chaque satellite visible Sat( i, j, k), j désignant un indice de satellite visible depuis B(i) à l'instant tk, sont calculées à l'aide d'éphémérides des satellites GNSS.

Dans la deuxième sous-étape 316, postérieure à la première sous-étape 314 avec k fixé, pour chaque position P(i) de balise virtuelle Be(i), i variant de 1 à NBe, la corrélation multi-satellites ou multidimensionnelle, en la balise virtuelle Be(i) à l'instant tk, désignée par $\Gamma_{SC}(i, tk)$, est calculée comme la somme quadratique des sorties des filtrages adaptés ou fonctions d'inter-corrélation du signal reçu sur les différents satellites en visibilité de la même balise à l'instant tk suivant l'expression :

$$\Gamma_{SC}(i, tk) = \sum_{j}(\Gamma_{SC}(j, i, tk))^2$$

dans laquelle :
$(\Gamma_{SC}(j, i, tk))^2$ désigne le carré de la fonction de corrélation élémentaire du signal GNSS reçu $SIS_{GNSS}(tk)$ par le récepteur GNSS à l'instant de recalage tk et le signal de réplique Ci(j,tk), attendu en la balise virtuelle Be(i) à l'instant tk et en provenance du satellite en visibilité, désigné par indice j de parcours de l'ensemble des satellites visibles depuis la balise virtuelle Be(i) à l'instant tk .

Dans la troisième sous-étape 318, consécutive à la deuxième sous-étape 316 avec k fixé, les corrélations multi-satellites à l'instant de recalage de synchronisation tk $\Gamma_{SC}(i, tk)$ sont sauvegardées dans une mémoire électronique sur le premier ensemble des balises virtuelles Be(i) et leur position géographique P(i) associé, décrit par l'indice i variant de 1 à NBe.

Puis dans la quatrième sous-étape 320 de test du parcours de la première boucle, l'indice k de parcours des temps de recalage tk est comparé au nombre total Nk des temps de recalage du deuxième ensemble.

Dans le cas où l'indice k est strictement inférieur au nombre total Nk, la cinquième sous-étape 322 d'incrémentation unitaire de l'indice de parcours k est exécutée, puis les première, deuxième, troisième et quatrième sous-étapes 314, 316, 318 et 320 sont à nouveaux exécutées.

Dans le cas où l'indice k de parcours de la première boucle est égal au nombre total Nk, la quatrième étape 212 est exécutée.

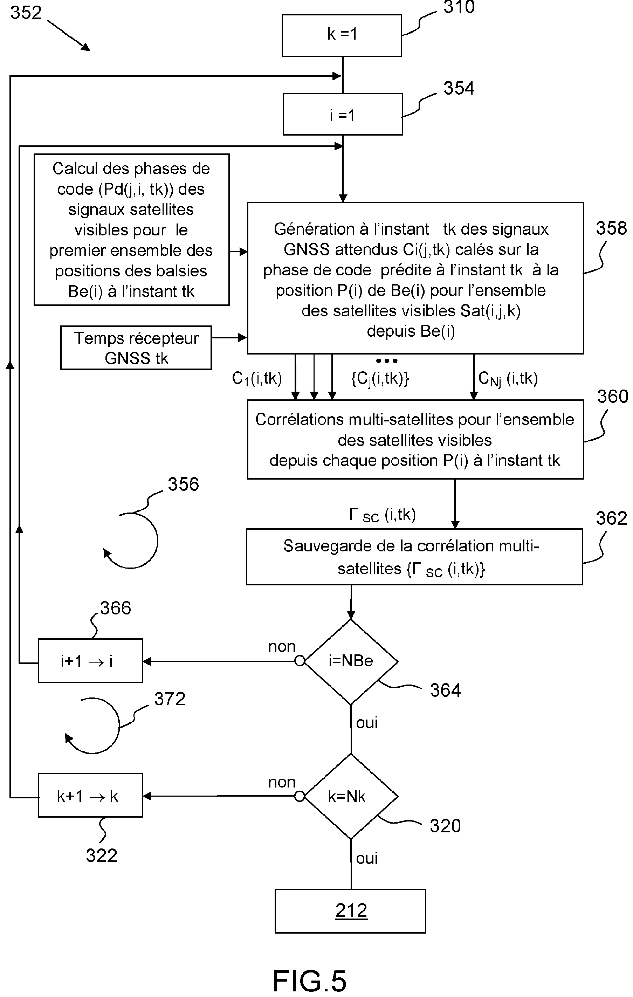

Suivant la Figure 5 et un deuxième mode particulier 352 de réalisation du procédé de localisation ponctuelle du train de la Figure 3, le procédé de localisation ponctuelle 352 est dérivé du procédé de localisation 302 selon le premier mode de réalisation de la Figure 4 et en diffère en ce que les première, deuxième et troisième sous-étapes 314, 316, 318 sont remplacées par une deuxième boucle 356 de sixième, septième, huitième, neuvième, dixième sous-étapes 358, 360, 362, 364, 366, de parcours des positions P(i) des balises virtuelles Be(i) du premier ensemble, paramétrée par l'indice i variant de 1 à NBe.

La deuxième boucle 356 paramétrée par l'indice k est imbriquée dans une première boucle 372 de parcours, paramétrée par l'indice i variant de 1 à NBe, et similaire à la première boucle 322 de la Figure 4 en ayant les mêmes sous-étapes 320, 322.

Avant d'exécuter la deuxième boucle 356, l'indice i de parcours des balises virtuelles du premier ensemble est mis à 1 au préalable dans une étape d'initialisation 354 correspondante.

Dans la sixième sous-étape 358, i et k étant fixés, les signaux GNSS de répliques GNSS attendus Ci(j,tk), calés à l'instant tk à la position P(i) de la balise virtuelle Be(i), pour l'ensemble des satellites visibles Sat(j, i, k) depuis la balise virtuelle Be(i) à l'instant tk, l'indice j paramétrant les satellites visibles sur cet ensemble, sont générés par calcul. Les phases des répliques GNSS Ci(j,tk) attendues en la balise virtuelle Be(i) à l'instant de recalage tk, désignées respectivement Pd(j, i,tk) pour chaque satellite visible Sat(j, i, tk), j désignant un indice de satellite visible depuis B(i) à l'instant tk, sont calculées à l'aide des éphémérides des satellites GNSS.

Dans la septième sous-étape 360, postérieure à la sixième sous-étape 314 avec i et k fixés, la corrélation multi-satellites ou multidimensionnelle, en la balise virtuelle Be(i) à l'instant tk, désignée par $\Gamma_{SC}(i, tk)$, est calculée comme la somme quadratique des sorties des filtrages adaptés ou fonctions d'inter-corrélation du signal reçu sur les différents satellites en visibilité de la même balise à l'instant tk suivant l'expression :

$$\Gamma_{SC}(i, tk) = \sum_{j}(\Gamma_{SC}(j, i, tk))^2$$

dans laquelle :
$(\Gamma_{SC}(j, i, tk))^2$ désigne le carré de la fonction d'inter-corrélation élémentaire du signal GNSS reçu $SIS_{GNSS}(tk)$ par le récepteur GNSS à l'instant de recalage tk et le signal de réplique Ci(j,tk), attendu en la balise virtuelle Be(i) à l'instant tk et en provenance du satellite en visibilité, désigné par indice j de parcours de l'ensemble des satellites visibles depuis la balise virtuelle Be(i) à l'instant tk.

Dans la huitième sous-étape 362, consécutive à la septième sous-étape 360 avec i et k fixés, la corrélation multidimensionnelle ou fonction de vraisemblance $\Gamma_{SC}(i, tk)$ à l'instant de recalage tk est sauvegardée dans une mémoire électronique.

Puis dans la neuvième sous-étape 364 de test du parcours de la deuxième boucle, l'indice i de parcours des positions P(i) des balises virtuelles Be(i) est comparé au nombre total NBe des balises virtuelles du premier ensemble.

Dans le cas où l'indice i est strictement inférieur au nombre total NBe de balises virtuelles, la dixième sous-étape 366 d'incrémentation unitaire de l'indice de parcours i est exécutée, puis les sixième, septième, huitième et dixième sous-étapes 358, 360, 362 et 364 sont à nouveaux exécutées.

Dans le cas où l'indice i de parcours de la deuxième boucle est égal au nombre total NBe de balises virtuelles, la quatrième sous-étape 320 de test de l'indice k de parcours de la première boucle 372 est exécutée.

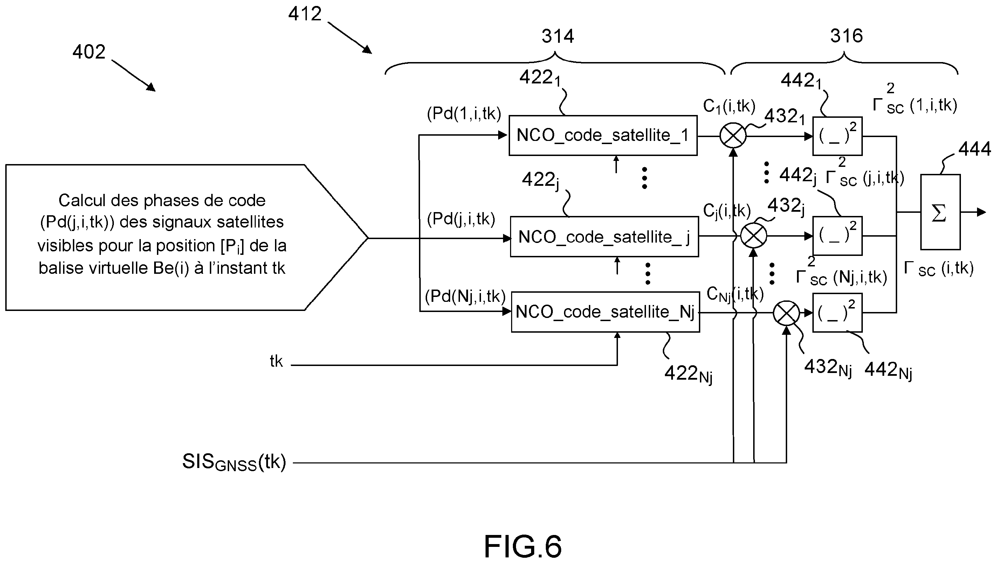

Suivant la Figure 6, un exemple d'architecture modulaire d'un système 402 de mise en œuvre partielle du procédé de localisation ponctuelle 352 selon le deuxième mode de réalisation de la Figure 5 est illustré.

L'architecture modulaire ici représentée comprend un ensemble 412 de modules de mise en œuvre de la sixième sous-étape 358 et la septième sous-étape 360, les modules pouvant être des modules logiciels exécutés par au moins un calculateur(s) électronique(s) ou des modules électroniques matériels ayant des fonctions particulières.

Les modules de mise en œuvre de la sixième sous-étape 358 sont réalisés par une batterie d'oscillateurs $422_1$, ...$422_j$, ... $422_{Nj}$ pilotés numériquement NCO (en anglais Numerically Controlled Oscillator) mis en parallèle pour générer au temps de recalage local tk des codes de répliques PRN attendus Cj(i,tk) des satellites visibles depuis la position P(i) de la balise virtuelle Be(i), désignés par un indice j dans cet ensemble de satellites visible variant de 1 à Nj, Nj étant le nombre total Nj des satellites visibles.

Les modules de mise en œuvre de la septième sous-étape 360 sont réalisés par :

- une batterie de modules $432_1$, ..., $432_j$, ..., $432_{Nj}$ de calcul en parallèle des fonctions d'inter-corrélation élémentaire entre le signal GNSS reçu par le récepteur GNSS à l'instant de recalage tk et les répliques des codes PRN attendus en la balise virtuelle Be(i) et en provenance des satellites visibles depuis ladite balise Be(i) à l'instant tk, et

- des modules $442_1$, ..., $442_j$, ..., $442_{Nj}$ d'élévation au carré à une entrée chacun, suivis d'un additionneur 444 à Nj entrées pour réaliser la somme quadratique des NL fonctions d'inter-corrélation élémentaire.

La sommation quadratique des sorties de filtrages adaptés ou fonctions d'inter-corrélation élémentaires sur les différents satellites en visibilité à un même instant de synchronisation tk d'une même balise virtuelle Be(i) est une caractéristique importante de l'invention. En effet, la cohérence de la phase porteuse n'étant pas assurée avec suffisamment de précision, du fait des aléas de propagation (retard, trajets multiples), il convient de ne pas réaliser une sommation cohérente des sorties de filtrages adaptés ou fonctions d'inter-corrélation sur les différents satellites en visibilité d'une même balise. De plus, le faible impact des erreurs résiduelles sur le code PRN après correction des retards modélisés sur la valeur de la fonction de corrélation multidimensionnelle (erreur faible de quelques mètres par rapport à la largeur du support de corrélation) rend pertinent la mise en œuvre d'une sommation quadratique ou non-cohérente.

Enfin, la sommation des fonctions de corrélation permet de lever l'indétermination de façon unique sur le temps local, du fait que la protection de l'erreur de temps de l'horloge locale reste cohérente (à l'erreur de temps près) de la seule position vraie du récepteur pour les mesures de pseudo-distances pour l"ensemble des direction d'axes à vue des satellites, alors que l'erreur de temps se projette de façon non cohérente selon les directions d'axes à vue pour les positions ne correspondant pas à la position réelle de réception.

Le domaine de corrélation spatiale dépend de la direction d'incidence du signal GNSS par rapport à l'axe d'alignement passant entre la balise virtuelle observée B(i) et une balise du premier ensemble des balises virtuelles et ladite balise observée B(i).

Les signaux « orthogonaux » au déplacement ne pouvant pas servir à lever l'indétermination de position, on peut éventuellement définir l'équivalent d'un coefficient d'affaiblissement de la précision (ou DOP pour « Dilution Of Precision » selon la terminologie anglo-saxonne) pour évaluer la capacité d'utiliser la balise virtuelle comme « référence absolue » en tenant compte de la géométrie des satellites.

Pour rappel, pour une résolution standard dans les trois dimensions, on utilise une matrice des cosinus directeurs des angles d'arrivée, qui entre en fait dans le système d'équations à résoudre.

Dans le cas d'une résolution à une dimension, un critère rigoureux équivalent peut être construit. Ce critère peut avoir pour forme :

$$DOP = \frac{1}{Nsat} . \left( \sum_j 1/cos(\alpha_j) \right)$$

dans laquelle :

- DOP représente le critère équivalent,

- Nsat représente le nombre de satellites de positionnement,

- $\alpha_j$ représente l'angle d'arrivée ou d'incidence du j-ième satellite, j étant un indice de parcours variant de 1 à Nsat.

On peut par exemple limiter la prise en compte des satellites à ceux qui présentent un angle d'incidence par rapport à la direction d'alignement entre la balise virtuelle observée et la balise virtuelle du premier ensemble la plus proche inférieur à 60°, ce qui correspond à une élongation maximale du support de corrélation d'un facteur 2.

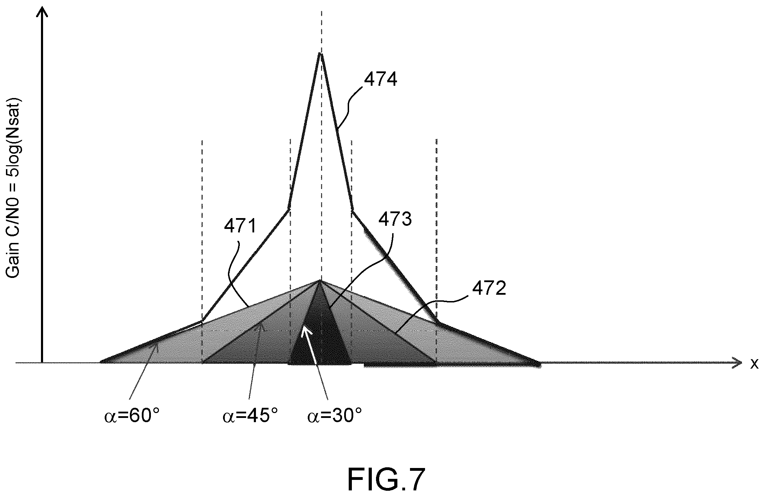

A titre illustration, la Figure 7 représente un exemple de résultat obtenu après sommation quadratique de fonctions d'inter-corrélation spatiale satellite à différentes incidences. Les courbes 471 à 473 sont respectivement des représentations graphiques de fonctions de corrélation pour un angle d'incidence du signal satellite par rapport à la direction de déplacement de 60°, 45° et 30°. La courbe 474 est la représentation graphique du cumul des fonctions de corrélation satellites.

De façon avantageuse, les accumulations non cohérentes des fonctions d'inter-corrélation permettent de renforcer le signal à bruit C/N0 ou gain de détection de 5.log(Nsat), Nsat représentant le nombre de satellites visibles depuis la position possible considéré, par rapport à une détection GNSS classique et ainsi de fournir une meilleure sensibilité et une meilleure précision sur la date et la position de détection du maximum de corrélation.

De manière avantageuse, lors du calcul de la fonction de corrélation multidimensionnelle ou fonction de vraisemblance en la position P(i) d'une balise virtuelle Be(i) donnée et un temps de recalage tk donné de synchronisation, les fonctions d'inter-corrélation élémentaires, obtenues pour les différents satellites Sat(j) en visibilité depuis la balise virtuelle Be(i) à l'instant tk, sont éventuellement pondérées en tenant compte d'une matrice des axes à vue géométrique des satellites visibles.

De manière générale, les fonctions de corrélation élémentaires ne sont pas toutes centrées exactement autour d'un même instant correspondant à un maximum de puissance, les écarts de synchronisation entre les signaux reçus provenant des satellites (écarts de synchronisation entre horloges de satellites GNSS différents, retards de propagation ionosphérique et troposphérique, trajets multiples d'un signal émis par un même satellite GNSS) entrainant des erreurs de la position de la fonction de corrélation spatiale.

Ces écarts de l'ordre, au maximum de plusieurs dizaines de nanoseconde, par exemple 200ns correspondant à 60m sur les pseudo-distances, se traduisent par un étalement des positions des maxima de corrélation entre les satellites visibles.

Pour pallier l'effet de cet étalement, et donc le bruit de détermination de passage au maximum de la fonction de corrélation, il est nécessaire de corriger lors de la génération des répliques GNSS locales des codes PRN attendues les distances attendues des satellites visibles à l'aide des modèles d'erreur disponibles, i.e. les modèles d'erreur d'horloge, d'erreur ionosphérique et d'erreur troposphérique connus. Ces modèles d'erreur peuvent être fournis par le récepteur GNSS embarqué ou via une liaison d'assistance, et permettent de réduire les erreurs des distances attendues des satellites à quelques mètres. Ces modèles d'erreur ne permettent pas de corriger les erreurs causées par les trajets multiples et interférence du signal de code PRN reçu en provenance d'un même satellite visible.

En plus du gain de détection apporté par le cumul quadratique des fonctions d'inter-corrélation élémentaires sur l'ensemble des satellites visibles depuis une même balise virtuelle Be(i) à un même instant tk de recalage de synchronisation, le procédé de localisation spatiale selon l'invention améliore la robustesse de la détection de la balise virtuelle Be(i0) la plus proche du récepteur GNSS embarqué du train, et donc de l'identification de la voie de garage Vi0 sur laquelle se trouve le train, vis-à-vis des trajets multiples spéculaires.

De manière remarquable, la position du maximum de corrélation reste inchangée en présence de trajets multiples spéculaires retardés par rapport au signal direct en dépit du fait que la fonction de corrélation temporelle soit déformée et non symétrique, ce qui traduit la robustesse de la position du maximum de corrélation vis-à-vis de la présence de trajets multiples.

De manière avantageuse, le procédé de localisation ponctuelle de balise virtuelle selon l'invention met à profit cette propriété pour rendre l'estimation de la « meilleure » vraisemblance de position, basée sur la seule estimation de la position du maximum de corrélation, plus robuste qu'une simple estimation de position directe, basée sur l'estimation de temps reçus à l'aide de discriminateurs sensibles aux distorsions de la fonction de corrélation classique.

Il est aussi remarquable que le domaine de corrélation spatial qui définit la capacité de résolution de position du maximum est directement lié à la forme d'onde du code et à l'étalement spectral utilisé.

Par exemple, dans le cas d'un code C/A GPS dont le support de corrélation spatial est de 300m, il est possible de comparer des positions proches dans ce domaine avec une sensibilité de résolution 0.15dB pour 5m d'écart entre balise.

L'utilisation d'un code PRN de type Galileo BoC(1,6) offre un support de corrélation au premier zéro de 25m et permet d'améliorer la sensibilité de résolution en la portant à 2 dB pour 5m d'écart entre deux balises virtuelle proche.

Une exploitation complète du spectre des signaux E5a-E5b espacés de 30MHz offrirait une capacité de résolution de 10m, soit une sensibilité de résolution de 6dB pour 5m d'écart.

Ainsi le gain de sensibilité obtenu par la mise en œuvre du procédé de localisation ponctuelle de balise virtuelle, associé à la connaissance du plan topographique des positions de garage, permet de renforcer les performances de détection de la voie de démarrage en termes de probabilité de fausse alarme et de probabilité de non détection.

Ce procédé de localisation ponctuelle d'une balise virtuelle selon l'invention, en comparant l'adéquation des différentes positions de garage d'un véhicule sur la base de la cohérence de phase des signaux répliques attendus avec les signaux reçus, est nettement différent d'un procédé de localisation classique basée sur estimation directe, éventuellement biaisée, de la position GNSS du véhicule, projetée ensuite sur une carte connue des voies de garage.

Par rapport à un fonctionnement standard ou classique du récepteur GNSS, basé sur une poursuite individuelle par satellite, le procédé de localisation ponctuelle d'un véhicule selon l'invention offre une meilleure robustesse aux trajets multiples, puisque, contrairement au discriminations temporelles, basées sur une symétrie supposée de la fonction de corrélation, la position du seul maximum de corrélation observé pour chaque satellite visible n'est pas affectée par la présence de trajets multiples, retardés chacun par rapport au signal satellite directement reçu.

De manière avantageuse, la recherche de la meilleure adaptation spatiale est liée à la suppression des corrélations entre les biais, associés aux trajets multiples réfléchis d'une position de réception à une autre dont les signaux GNSS peuvent être l'objet, ce qui réduit le risque d'existence d'un biais stable tout le long de la fonction de corrélation spatiale qui, à l'image de la méthode standard d'estimation de la date d'arrivée par corrélation avance-retard, entrainerait un biais sur la détermination de la position du pic de corrélation maximum.

De manière préférée mais non limitative, le procédé et le système de localisation ponctuelle selon l'invention trouvent leur application dans le domaine ferroviaire pour déterminer la position de démarrage d'un train parmi un ensemble de positions de garage connues a priori.

De manière générale, le procédé de localisation et le système de localisation ponctuelle selon l'invention peuvent s'appliquer à tout moyen de locomotion ou véhicule terrestre garé ou stationné sur un segment curviligne ou rectiligne, formant une voie de départ, d'un ensemble de segments curvilignes ou rectilignes, espacés entre eux suffisamment et formant des voies de départ. Ce peut être le cas, par exemple, dans le domaine maritime, pour le positionnement de navires garés dans des « rails de navigation », dans le domaine du transport terrestre par exemple, pour la localisation de véhicules de transport en commun garés dans des files d'attente.

De façon préférentielle mais non limitative, la présente invention trouve son application dans le domaine ferroviaire.

Par calculateur électronique on entend ici un système comportant un ou plusieurs microprocesseurs, processeurs, ordinateurs ou tout autre moyen équivalent, pouvant être programmés de façon appropriée pour implémenter les différentes opérations de calcul mises en œuvre dans le cadre du procédé selon l'invention.

Un autre objet de la présente invention est un produit de programme informatique comprenant des instructions lisibles par un ordinateur ou tout type de dispositif informatique équivalent qui, lorsqu'elles sont exécutées sur un processeur, amènent le processeur à exécuter le procédé de localisation ponctuelle d'un véhicule à l'arrêt sur une voie de garage.

**Revendications**

1. Procédé de localisation ponctuelle d'un véhicule à l'arrêt sur une voie de garage parmi un ensemble de voies de garage à l'aide de balises virtuelles, le procédé de localisation étant mis en œuvre par un système de localisation ponctuelle comprenant :

   - un récepteur GNSS (182), embarqué à bord du véhicule (154), apte à mesurer directement des pseudo-distances calées sur une base de temps locale synchronisée dans une plage temporelle d'imprécision de synchronisation, à l'aide de signaux de géo-positionnement émis par des satellites de géo-positionnement GNSS en visibilité dudit récepteur GNSS ; et
   - un calculateur électronique (186) de traitement, externe au ou intégré dans le récepteur GNSS,le procédé de localisation ponctuelle comprenant un ensemble d'étapes (204) dans lesquelles :
   - la vraisemblance de plusieurs hypothèses de localisation à l'arrêt du véhicule (154), correspondant à un premier ensemble d'un nombre entier NBe de balises virtuelles Be(i) prédéterminées, i variant de 1 à NBe, dont les positions respectives sont connues à raison d'au moins une balise virtuelle par voie de garage, est déterminée (208, 210 ; 314, 316, 318 ; 358, 360, 362) et comparée (212) par le calculateur électronique en corrélant des signaux de géo-positionnement GNSS, reçus à différents instants d'un deuxième ensemble par le récepteur GNSS embarqué (182) à bord du véhicule (154), avec des signaux de géo-positionnement GNSS prédits de répliques attendues pour lesdites différentes positions des balises virtuelles Be(i) du premier ensemble aux différents instants,
   - la position de garage détectée du véhicule (154) est celle qui correspond à la vraisemblance maximale ;

   et dans lequel, pour réduire la désadaptation entrainée par une mauvaise synchronisation de la référence de temps local du récepteur GNSS (182) par rapport au temps du système de positionnement global GNSS, une couverture de la plage temporelle d'imprécision de la synchronisation de l'horloge locale est assurée par le calculateur électronique (186) en découpant de manière prédéterminée ladite plage temporelle d'imprécision en sections temporelles, représentées respectivement par des instants ou temps de recalage tk de synchronisation, k variant de 1 à Nk, avec Nk désignant le nombre d'instants de recalage de synchronisation dans la plage temporelle d'imprécision, les corrélations des signaux de géo-positionnement GNSS reçus par le récepteur GNSS (182) embarqué étant effectuées auxdits temps de recalage tk de synchronisation.

2. Procédé de localisation ponctuelle d'un véhicule selon la revendication 1 dans lequel les corrélations des signaux de géo-positionnement GNSS reçus par le récepteur GNSS (182) embarqué en les différentes positions P(i) des balises virtuelles Be(i), i variant de 1 à NBe, et aux différents instants tk, k variant de 1 à Nk, sont des corrélations multi-satellites avec les signaux de répliques GNSS correspondantes attendues en chaque position P(i) à l'instant tk et provenant des satellites Sat(i,j, k) visibles depuis ladite position P(i) de la balise virtuelle Be(i) à l'instant tk, la corrélation multi-satellites en la position P(i) à l'instant de recalage de synchronisation tk, i variant de 1 à NBe et k variant de 1 à Nk, étant égale à la somme quadratique sur l'ensemble des satellites visibles depuis la position P(i) à l'instant de recalage tk, des corrélations élémentaires entre le signal GNSS réel reçu en la position P(i) à l'instant tk par le récepteur GNSS et les répliques GNSS attendues à l'instant tk à la position Pi en provenance des satellites visibles Sat(i, j, k) depuis la balise Be(i) à l'instant tk.

3. Procédé de localisation ponctuelle d'un véhicule selon la revendication 1, dans lequel l'ensemble (204) des étapes comprend une phase d'initialisation, une phase de recherche de la position de la balise virtuelle la plus proche de la position de garage du véhicule suivant une stratégie prédéterminée, et une phase d'exploitation de la phase de recherche dans laquelle la voie de garage Vi0 est identifiée a partir de la balise virtuelle B(ei0) estimée la plus proche du véhicule, et la connaissance a priori des positions P(i) des balises virtuelles Be(i), fixées et prédéterminées, i variant de 1 à NBe.

4. Procédé de localisation ponctuelle d'un véhicule selon la revendication 3, dans lequel la phase d'initialisation de l'ensemble (204) des étapes comporte une première étape (206) d'initialisation au cours de laquelle le premier ensemble des positions possibles P(i) des balises virtuelles Be(i), i variant de 1 à NBe, correspondant aux voies Vi de garage possibles du véhicule, est déterminé à partir d'une base de données topographiques qui peut être externe au récepteur GNSS ou qui peut être incluse dans une mémoire de base du récepteur GNSS, et des temps de recalage de synchronisation tk, k variant de 1 à Nk, formant un deuxième ensemble d'hypothèses, sont déterminées dans la plage temporelle d'imprécision de synchronisation en étant espacés sensiblement régulièrement, Nk étant un entier supérieur ou égal à 3, la plage temporelle d'imprécision de synchronisation étant incluse dans le domaine de corrélation temporelle d'une séquence de code PRN GNSS ou étant déterminée à l'aide d'un rayon temporel de protection d'intégrité, calculé à partir des données temporelles d'une fonction RAIM, intégrée dans ou externe au récepteur GNSS.

5. Procédé de localisation ponctuelle d'un véhicule selon la revendication 4, dans lequel l'écart entre la position réelle du récepteur GNSS (182) le long de la voie de garage sur laquelle le véhicule (154) est garé et la position de la balise virtuelle associée est inférieur à un intervalle spatial d'imprécision dont l'effet temporel équivalent sur la précision de corrélation temporelle est nettement inférieur au domaine de corrélation temporelle de la séquence de code PRN GNSS utilisé.

6. Procédé de localisation ponctuelle d'un véhicule selon l'une des revendications 4 et 5, dans lequel la phase de recherche de la balise virtuelle la plus proche comporte une deuxième étape (208) au cours de laquelle :

    - le récepteur GNSS (182) embarqué reçoit les signaux GNSS réels aux instants de recalage de synchronisation tk, k variant de 1 à Nk, et
    - le calculateur électronique (186) détermine pour chaque instant tk de recalage de synchronisation tk du deuxième ensemble d'hypothèses, k variant de 1 à Nk, et pour chaque position possible P(i) de balise virtuelle Be(i) du premier ensemble, i variant de 1 à NBe, du premier ensemble les signaux de répliques GNSS attendus par le récepteur GNSS aux positions P(i) et temps tk pour chaque satellite visible Sat(,i, j, k) au temps local tk du récepteur, i variant de 1 à NBe et k variant de 1 à Nk ; puis
    - pour chaque instant de recalage tk de deuxième ensemble et pour chaque position P(i) des balises virtuelles du premier ensemble, le calculateur électronique (186) détermine des corrélations élémentaires entre d'une part les signaux des répliques GNSS attendus aux différentes positions de garage P(i) et différents temps de recalage de synchronisation tk et en provenance des différents satellites visibles à chaque instant tk et les signaux réels GNSS reçus aux instants de recalage de synchronisation tk par le récepteur GNSS (182) embarqué du véhicule.

7. Procédé de localisation ponctuelle d'un véhicule selon la revendication 6, dans lequel la phase de recherche de la balise virtuelle la plus proche du véhicule comporte une troisième étape (210), exécutée après ou en parallèle de la deuxième étape (208) au cours de laquelle pour chaque instant de recalage tk du deuxième ensemble et pour et pour chaque position P(i) des balises virtuelles du premier ensemble, le calculateur électronique (186) détermine des corrélations multi-satellites, formant une valeur de la fonction de vraisemblance, et égale, pour chaque position P(i) des balises virtuelles du premier ensemble et chaque instant de recalage tk du deuxième ensemble, à la somme quadratique des corrélations élémentaires entre le signal entre le signal GNSS reçu par le récepteur GNSS à l'instant tk et les signaux des répliques attendues à l'instant tk en la positon P(i) de la balise virtuelle en provenance des satellites visibles Sat(, i, j, k) visibles depuis la position P(i) à l'instant tk.

8. Procédé de localisation ponctuelle d'un véhicule selon la revendication 7, dans lequel la phase de recherche de la balise virtuelle la plus proche comporte une quatrième étape (212), exécutée après la troisième étape (210) au cours de laquelle le calculateur électronique (186) détermine la position P(i0) de la balise virtuelle et le temps de recalage tk0 qui maximise la fonction de vraisemblance sur le premier ensemble des positions P(i) et le deuxième ensemble des temps de recalage tk, la position P(i0) ainsi déterminée étant la position de la balisé virtuelle Be(i0) détectée la plus proche du récepteur embarqué.

9. Procédé de localisation ponctuelle d'un véhicule selon la revendication 8, comprenant en outre une cinquième étape (214), exécutée après la quatrième étape (212), dans laquelle :

   - le calculateur électronique (186) identifie la voie de garage sur laquelle se trouve à l'arrêt le véhicule à partir de la position P(i0) de la balise virtuelle détectée la plus proche et d'une table de correspondance entre l'ensemble des balises virtuelles et l'ensemble des voies de garage ; et/ou
   - le calculateur électronique (186) fournit l'information de temps de recalage de synchronisation détectée tk0 à un mécanisme de correction d'une dérive de l'horloge locale du détecteur GNSS ; et/ou
   - le calculateur électronique (186) lève une alarme en cas d'échec d'identification de la voie de garage et relance une exploration dans un domaine temporel d'imprécision de synchronisation plus étendu.

10. Procédé de localisation ponctuelle d'un véhicule selon l'une des revendications 6 à 9, dans lequel pour chaque position (Pi) de balise virtuelle, l'ensemble des satellites visibles à un instant donné tk depuis toutes les balises virtuelles Be(i), i variant de 1 à NBe, est identique en étant indépendant de l'indice i de parcours des balises virtuelles et fonction du temps tk seulement.

11. Procédé de localisation ponctuelle d'un véhicule selon l'une des revendications 1 à 10, dans lequel l'intégrité de la localisation est contrôlée par une étape supplémentaire dans laquelle il est vérifié que la vraisemblance maximale est supérieure à un seuil de sécurité prédéterminé garantissant l'intégrité de la localisation.

12. Dispositif de localisation ponctuelle d'un véhicule à l'arrêt sur une voie de garage parmi un ensemble de voies de garage à l'aide de balises virtuelles, comprenant :

   - un récepteur GNSS (182), embarqué à bord du véhicule, apte à mesurer directement des pseudo-distances calées sur une base de temps locale synchronisée dans une plage temporelle de précision, à l'aide de signaux de géo-positionnement émis par des satellites de géo-positionnement GNSS en visibilité dudit récepteur ; et
   - un calculateur électronique (186) de traitement, externe au ou intégré dans le récepteur GNSS, le dispositif de localisation ponctuelle étant **caractérisé en ce que**
   le calculateur électronique (186) est configuré pour :

      - déterminer et comparer la vraisemblance de plusieurs hypothèses de localisation à l'arrêt du véhicule, correspondant à une premier ensemble d'un nombre entier NBe balises virtuelles Be(i) prédéterminées, i variant de 1 à NBe, dont les positions respectives sont connues à raison d'au moins une balise virtuelle par voie de garage, en corrélant des signaux de géo-positionnement GNSS reçus à différents instants d'un deuxième ensemble par le récepteur GNSS embarqué à bord du véhicule avec des signaux de géo-positionnement GNSS prédits de répliques attendues pour lesdites différentes positions des balises virtuelles du premier ensemble aux différents instants ; et
      - détecter la position actuelle de garage du véhicule comme celle correspondant à la vraisemblance maximale ;

   dans lequel, pour réduire la désadaptation entrainée par une mauvaise synchronisation de la référence de temps local du récepteur GNSS par rapport au temps du système de positionnement global GNSS :

- le calculateur électronique (186) est configuré pour assurer une couverture de la plage temporelle d'imprécision de l'horloge locale en découpant de manière prédéterminée ladite plage temporelle d'imprécision en sections temporelles, représentées respectivement par des instants ou temps de recalage tk de synchronisation, k variant de 1 à Nk, avec Nk désignant le nombre d'instants de recalage de synchronisation dans la plage temporelle d'imprécision, les corrélations des signaux de géo-positionnement GNSS reçus par le récepteur GNSS embarqué étant effectuées auxdits temps de recalage tk de synchronisation ; et
- les corrélations des signaux de géo-positionnement GNSS reçus par le récepteur GNSS (182) embarqué en les différentes positions P(i) des balises virtuelles Be(i), i variant de 1 à NBe, et aux différents instants tk, k variant de 1 à Nk, sont des corrélations multi-satellites avec les signaux de répliques GNSS correspondantes attendues en chaque position P(i) à l'instant tk et provenant des satellites Sat(i,j, k) visibles depuis ladite position P(i) de la balise virtuelle Be(i) à l'instant tk, la corrélation multi-satellites en la position P(i) à l'instant de recalage de synchronisation tk, i variant de 1 à NBe et k variant de 1 à Nk, étant égale à la somme quadratique sur l'ensemble des satellites visibles depuis la position P(i) à l'instant de recalage tk, des corrélations élémentaires entre le signal GNSS réel reçu en la position P(i) à l'instant tk par le récepteur GNSS et les répliques GNNS attendues à l'instant tk à la position Pi en provenance des satellites visibles Sat(i, j, k) depuis la balise Be(i) à l'instant tk.

**13.** Dispositif de localisation ponctuelle d'un véhicule selon la revendication 12, dans lequel le calculateur électronique (186) est configuré pour déterminer la plage temporelle d'imprécision de synchronisation en l'incluant dans le domaine de corrélation temporelle d'une séquence de code PRN GNSS ou en calculant un rayon temporel de protection d'intégrité à partir des données temporelles d'une fonction RAIM, la fonction RAIM étant intégrée dans ou externe au récepteur GNSS.

**14.** Système de localisation ponctuelle d'un véhicule à l'arrêt sur une voie de garage parmi un ensemble de voies de garage à l'aide de balises virtuelles, comprenant :

- un système GNSS de géo-positionnement global par satellites (172), et
- un dispositif de localisation ponctuelle (174) d'un véhicule (154) défini selon l'une des revendications 12 et 13, de préférence augmenté par une fonction RAIM implémenté au sein du récepteur GNSS ou d'un deuxième récepteur GNSS séparé du premier récepteur GNSS ;

le véhicule (154) étant :

- un véhicule terrestre, garé sur une voie terrestre de garage, de manière préférée un train garé sur une voie de garage ferroviaire, ou
- un véhicule maritime, garé sur une voie maritime.

**15.** Produit de programme informatique comprenant des instructions lisibles par ordinateur qui, lorsqu'elles sont exécutées sur un processeur, amènent le processeur à exécuter le procédé de localisation ponctuelle d'un véhicule à l'arrêt sur une voie de garage parmi un ensemble de voies de garage à l'aide de balises virtuelles, défini selon une des revendications 1 à 11.

**Patentansprüche**

**1.** Verfahren zum punktuellen Lokalisieren eines auf einem Abstellgleis von einem Satz von Abstellgleisen angehaltenen Fahrzeugs mit Hilfe von virtuellen Peilsendern, wobei das Lokalisierungsverfahren durch ein System zum punktuellen Lokalisieren implementiert wird, umfassend:

- einen GNSS-Empfänger (182), der sich an Bord des Fahrzeugs (154) befindet, der dazu geeignet ist, Pseudoentfernungen direkt zu messen, die auf eine synchronisierte lokale Zeitbasis ausgerichtet sind, die in einem zeitlichen Synchronisationsungenauigkeitsbereich synchronisiert ist, mit Hilfe von Geopositionierungssignalen, die von Geopositionierungssatelliten GNSS in Sichtweite des GNSS-Empfängers ausgesendet werden; und
- einen elektronischen Verarbeitungsrechner (186), der extern oder in dem GNSS-Empfänger integriert ist, wobei das Verfahren zum punktuellen Lokalisieren einen Satz von Schritten (204) umfasst, bei denen:
- die Wahrscheinlichkeit mehrerer Lokalisierungshypothesen des angehaltenen Fahrzeugs (154), entsprechend einem ersten Satz aus einer ganzen Zahl NBe von vorbestimmten virtuellen Peilsendern Be(i), wobei i von 1 bis NBe variiert, von denen die jeweiligen Positionen in einer Menge von mindestens einem virtuellen Peilsender pro Abstellgleis bekannt sind, bestimmt (208, 210; 314, 316, 318; 358, 360, 362) und von dem elektronischen Rechner verglichen wird (212), indem er Geopositionierungssignale GNSS, die zu verschiedenen Zeitpunkten von einem zweiten Satz von dem an Bord des Fahrzeugs (154) befindlichen GNSS-Empfänger (182) empfangen werden, mit vorhergesagten Geopositionierungsdaten GNSS von für die verschiedenen Positionen der virtuellen Peilsender Be(i) des ersten Satzes zu den verschiedenen Zeitpunkten erwarteten Repliken korreliert,

- die erkannte Abstellposition des Fahrzeugs (154) diejenige ist, die der maximalen Wahrscheinlichkeit entspricht;

und wobei, um die Fehlanpassung zu reduzieren, die durch eine schlechte Synchronisation des lokalen Zeitbezugs des GNSS-Empfängers (182) in Bezug auf die Zeit des globalen Positionierungssystems GNSS verursacht wird, ein Erfassungsbereich des zeitlichen Ungenauigkeitsbereichs der Synchronisation der lokalen Uhr durch den elektronischen Rechner (186) gewährleistet wird, indem auf vorbestimmte Weise der zeitliche Ungenauigkeitsbereich in zeitliche Abschnitte unterteilt wird, jeweils dargestellt durch Synchronisationsrücksetzzeitpunkte oder -zeiten tk, wobei k von 1 bis Nk variiert, wobei Nk die Anzahl von Synchronisationsrücksetzzeitpunkten in dem zeitlichen Ungenauigkeitsbereich bezeichnet, wobei die Korrelationen der Geopositionierungssignale GNSS, die von dem GNSS-Empfänger (182) an Bord empfangen werden, zu den Synchronisationsrücksetzzeiten tk erfolgen.

2. Verfahren zum punktuellen Lokalisieren eines Fahrzeugs nach Anspruch 1, wobei die Korrelationen der Geopositionierungssignale GNSS, die von dem GNSS-Empfänger (182) an Bord an den verschiedenen Positionen P(i) der virtuellen Peilsender Be(i), wobei i von 1 bis NBe variiert, und zu den verschiedenen Zeitpunkten tk, wobei k von 1 bis Nk variiert, empfangen werden, Mehrsatelliten-Korrelationen mit den entsprechenden Repliksignalen GNSS sind, die an jeder Position P(i) zum Zeitpunkt tk erwartet werden und von den Satelliten Sat(i,j,k) kommen, die von der Position P(i) des virtuellen Peilsenders Be(i) aus zum Zeitpunkt tk sichtbar sind, wobei die Mehrsatelliten-Korrelation an der Position P(i) zum Synchronisationsrücksetzzeitpunkt tk, wobei i von 1 bis NBe variiert und k von 1 bis Nk variiert, gleich der Quadratsumme, der Gesamtheit der von der Position P(i) aus zum Rücksetzzeitpunkt tk sichtbaren Satelliten, der Elementarkorrelationen zwischen dem tatsächlichen GNSS-Signal, das an der Position P(i) zum Zeitpunkt tk vom GNSS-Empfänger empfangen wird, und der GNSS-Repliken, die zum Zeitpunkt tk an der Position Pi von den von dem Peilsender Be(i) zum Zeitpunkt tk aus sichtbaren Satelliten Sat(i, j, k) erwartet werden, sind.

3. Verfahren zum punktuellen Lokalisieren eines Fahrzeugs nach Anspruch 1, wobei der Satz (204) der Schritte eine Initialisierungsphase, eine Phase zum Suchen der Position des virtuellen Peilsenders, der der Abstellposition des Fahrzeugs am nächsten ist, wobei einer vorbestimmten Strategie gefolgt wird, und eine Aufbereitungsphase der Suchphase umfasst, in der das Abstellgleis Vi0 anhand des virtuellen Peilsenders B(ei0), der als dem Fahrzeug am nächsten gelegen geschätzt wird, und einer grundsätzlichen Kenntnis der Positionen P(i) der virtuellen Peilsender Be(i), deren Positionen festgelegt und vorbestimmt sind, wobei i von 1 bis NBe variiert, identifiziert wird.

4. Verfahren zum punktuellen Lokalisieren eines Fahrzeugs nach Anspruch 3, wobei die Initialisierungsphase des Satzes (204) der Schritte einen ersten Schritt (206) zum Initialisieren aufweist, während dessen der erste Satz der möglichen Positionen P(i) der virtuellen Peilsender Be(i), wobei i von 1 bis NBe variiert, die den möglichen Abstellgleisen Vi des Fahrzeugs entsprechen, anhand einer topographischen Datenbank bestimmt wird, die extern vom GNSS-Empfänger sein kann oder in einem Grundspeicher des GNSS-Empfängers eingeschlossen sein kann, und Synchronisationsrücksetzzeiten tk, wobei k von 1 bis Nk variiert, die einen zweiten Satz von Hypothesen bilden, im zeitlichen Synchronisationsungenauigkeitsbereich bestimmt werden, indem sie im Wesentlichen gleichmäßig beabstandet werden, wobei Nk eine ganze Zahl größer als oder gleich 3 ist, wobei der zeitliche Synchronisationsungenauigkeitsbereich in der Zeitkorrelationsdomäne einer Codesequenz PRN GNSS eingeschlossen ist oder mit Hilfe eines Unverfälschtheitsschutzzeitradius bestimmt wird, der anhand der Zeitdaten einer RAIM-Funktion berechnet wird, die in dem GNSS-Empfänger integriert ist oder sich extern von diesem befindet.

5. Verfahren zum punktuellen Lokalisieren eines Fahrzeugs nach Anspruch 4, wobei die Differenz zwischen der tatsächlichen Position des GNSS-Empfängers (182) entlang des Abstellgleises, auf dem das Fahrzeug (154) abgestellt ist, und der Position des zugeordneten virtuellen Peilsenders kleiner als ein räumliches Ungenauigkeitsintervall ist, dessen äquivalente zeitliche Wirkung auf die zeitliche Korrelationsgenauigkeit deutlich kleiner als die Zeitkorrelationsdomäne der verwendeten Codesequenz PRN GNSS ist.

6. Verfahren zum punktuellen Lokalisieren eines Fahrzeugs nach einem der Ansprüche 4 und 5, wobei die Phase zum Suchen des virtuellen Peilsenders einen zweiten Schritt (208) aufweist, während dessen:

- der GNSS-Empfänger (182) an Bord die tatsächlichen GNSS-Signale zu den Synchronisationsrücksetzzeitpunkten tk empfängt, wobei k von 1 bis Nk variiert, und
- der elektronische Rechner (186) für jeden Synchronisationsrücksetzzeitpunkt tk des zweiten Satzes von Hypothesen, wobei k von 1 bis Nk variiert, und für jede mögliche Position P(i) eines virtuellen Peilsenders Be(i) des ersten Satzes, wobei i von 1 bis NBe variiert, des ersten Satzes die GNSS-Repliksignale bestimmt, die vom GNSS-Empfänger an den Positionen P(i) und zu den Zeiten tk für jeden sichtbaren Satelliten Sat(i, j, k) zur lokalen Zeit tk des Empfängers erwartet werden, wobei i von 1 bis NBe variiert und k von 1 bis Nk variiert; dann
- für jeden Rücksetzzeitpunkt tk des zweiten Satzes und für jede Position P(i) der virtuellen Peilsender des ersten Satzes der elektronische Rechner (186) Elementarkorrelationen zwischen einerseits den Signalen der GNSS-Repliken, die an den verschiedenen Abstellpositionen P(i) und zu verschiedenen Synchronisationsrücksetzzeiten tk erwartet werden und von den verschiedenen, zu jedem Zeitpunkt tk sichtbaren Satelliten kommen, und den tatsächlichen GNSS-Signalen, die zu den Synchronisationsrücksetzzeitpunkten tk von dem GNSS-Empfänger (182) an Bord des Fahrzeugs empfangen werden, bestimmt.

7. Verfahren zum punktuellen Lokalisieren eines Fahrzeugs nach Anspruch 6, wobei die Phase zum Suchen des dem Fahrzeug am nächsten gelegenen virtuellen Peilsenders einen dritten Schritt (210) aufweist, der nach oder parallel zu dem zweiten Schritt (208) ausgeführt wird, während dessen für jeden Rücksetzzeitpunkt tk des zweiten Satzes und für und für jede Position P(i) der virtuellen Peilsender des ersten Satzes der elektronische Rechner (186) Mehrsatelliten-Korrelationen bestimmt, indem er einen Wert der Wahrscheinlichkeitsfunktion bildet, und gleich, für jede Position P(i) der virtuellen Peilsender des ersten Satzes und jeden Rücksetzzeitpunkt tk des zweiten Satzes, zu der Quadratsumme der Elementarkorrelationen zwischen dem Signal zwischen dem GNSS-Signal, das von dem GNSS-Empfänger zum Zeitpunkt tk empfangen wird, und den Signalen der Repliken, die zum Zeitpunkt tk an der Position P(i) des virtuellen Peilsenders von den sichtbaren Satelliten Sat (i, j, k), die von der Position P(i) aus zum Zeitpunkt tk sichtbar sind, erwartet werden.

8. Verfahren zum punktuellen Lokalisieren eines Fahrzeugs nach Anspruch 7, wobei die Phase zum Suchen des nächstgelegenen virtuellen Peilsenders einen vierten Schritt (212) aufweist, der nach dem dritten Schritt (210) ausgeführt wird, während dessen der elektronische Rechner (186) die Position P(i0) des virtuellen Peilsenders und die Rücksetzzeit tk0 bestimmt, die die Wahrscheinlichkeitsfunktion für den ersten Satz der Positionen P(i) und den zweiten Satz der Rücksetzzeiten tk maximiert, wobei die so bestimmte Position P(i0) die Position des erkannten virtuellen Peilsenders Be(i0) ist, der dem Empfänger an Bord am nächsten ist.

9. Verfahren zum punktuellen Lokalisieren eines Fahrzeugs nach Anspruch 8, ferner umfassend einen fünften Schritt (214), der nach dem vierten Schritt (212) ausgeführt wird, bei dem:

- der elektronische Rechner (186) das Abstellgleis, auf dem sich das angehaltene Fahrzeug befindet, anhand der Position P(i0) des erkannten, am nächsten gelegenen Peilsenders und einer Verweistabelle zwischen dem Satz der virtuellen Peilsender und dem Satz der Abstellgleise identifiziert; und/oder
- der elektronische Rechner (186) die erkannte Synchronisationsrücksetzzeitinformation tk0 einem Mechanismus zum Korrigieren einer Drift der lokalen Uhr des GNSS-Detektors liefert; und/oder
- der elektronische Rechner (186) im Fall einer misslungenen Identifizierung des Abstellgleises einen Alarm auslöst und eine Untersuchung in einer erweiterten Synchronisationsungenauigkeitszeitdomäne reinitialisiert.

10. Verfahren zum punktuellen Lokalisieren eines Fahrzeugs nach einem der Ansprüche 6 bis 9, wobei für jede Position P(i) des virtuellen Peilsenders der Satz der zu einem gegebenen Zeitpunkt tk von allen virtuellen Peilsendern Be(i) aus sichtbaren Satelliten, wobei i von 1 bis NBe variiert, identisch ist, während er unabhängig ist von dem Streckenindex i der virtuellen Peilsender und nur von der Zeit tk abhängig ist.

11. Verfahren zum punktuellen Lokalisieren eines Fahrzeugs nach einem der Ansprüche 1 bis 10, wobei die Unverfälschtheit der Lokalisierung durch einen zusätzlichen Schritt kontrolliert wird, bei dem überprüft wird, dass die maximale Wahrscheinlichkeit über einem vorbestimmten Sicherheitsschwellenwert liegt, der die Unverfälschtheit der Lokalisierung garantiert.

**12.** Vorrichtung zum punktuellen Lokalisieren eines auf einem Abstellgleis von einem Satz von Abstellgleisen angehaltenen Fahrzeugs mit Hilfe von virtuellen Peilsendern, umfassend:

- einen GNSS-Empfänger (182), der sich an Bord des Fahrzeugs befindet, der dazu geeignet ist, Pseudoentfernungen direkt zu messen, die auf eine synchronisierte lokale Zeitbasis in einem zeitlichen Genauigkeitsbereich ausgerichtet werden, mit Hilfe von Geopositionierungssignalen, die von Geopositionierungssatelliten GNSS in Sichtweite des Empfängers ausgesendet werden; und

- einen elektronischen Verarbeitungsrechner (186), der extern oder in dem GNSS-Empfänger integriert ist, wobei die Vorrichtung zum punktuellen Lokalisieren **dadurch gekennzeichnet ist, dass**

der elektronische Rechner (186) dafür konfiguriert ist:

- die Wahrscheinlichkeit von mehreren Hypothesen zum Lokalisieren des angehaltenen Fahrzeugs zu bestimmen und zu vergleichen, entsprechend einem ersten Satz einer ganzen Zahl NBe vorbestimmten virtuellen Peilsendern Be(i), wobei i von 1 bis NBe variiert, deren jeweilige Positionen in einer Menge von mindestens einem virtuellen Peilsender pro Abstellgleis bekannt sind, durch Korrelieren von Geopositionierungssignalen GNSS, die zu verschiedenen Zeitpunkten von einem zweiten Satz von dem GNSS-Empfänger empfangen werden, der sich an Bord des Fahrzeugs befindet, mit vorhergesagten Geopositionierungssignalen GNSS von Repliken, die für die verschiedenen Positionen der virtuellen Peilsender des ersten Satzes zu den verschiedenen Zeitpunkten erwartet werden; und
- die aktuelle Abstellposition des Fahrzeugs als diejenige zu erkennen, die der maximalen Wahrscheinlichkeit entspricht;

wobei, um die Fehlanpassung zu reduzieren, die durch eine schlechte Synchronisation des lokalen Zeitbezugs des GNSS-Empfängers in Bezug auf die Zeit des globalen Positionierungssystems GNSS verursacht wird:

- der elektronische Rechner (186) dafür konfiguriert ist, einen Erfassungsbereich des zeitlichen Ungenauigkeitsbereichs der lokalen Uhr zu gewährleisten, indem er auf vorbestimmte Weise den zeitlichen Ungenauigkeitsbereich in zeitliche Abschnitte unterteilt, jeweils dargestellt durch Synchronisationsrücksetzzeitpunkte oder -zeiten tk, wobei k von 1 bis Nk variiert, wobei Nk die Anzahl von Synchronisationsrücksetzzeitpunkten in dem zeitlichen Ungenauigkeitsbereich bezeichnet, wobei die Korrelationen der Geopositionierungssignale GNSS, die von dem GNSS-Empfänger an Bord empfangen werden, zu den Synchronisationsrücksetzzeiten tk erfolgen; und

- die Korrelationen der Geopositionierungssignale GNSS, die von dem GNSS-Empfänger (182) an Bord an den verschiedenen Positionen P(i) der virtuellen Peilsender Be(i), wobei i von 1 bis NBe variiert, und zu den verschiedenen Zeitpunkten tk, wobei k von 1 bis Nk variiert, empfangen werden, Mehrsatelliten-Korrelationen mit den entsprechenden Repliksignalen GNSS sind, die an jeder Position P(i) zum Zeitpunkt tk erwartet werden und von den Satelliten Sat(i,j,k) kommen, die von der Position P(i) des virtuellen Peilsenders Be(i) aus zum Zeitpunkt tk sichtbar sind, wobei die Mehrsatelliten-Korrelation an der Position P(i) zum Synchronisationsrücksetzzeitpunkt tk, wobei i von 1 bis NBe variiert und k von 1 bis Nk variiert, gleich der Quadratsumme des Satzes der von der Position P(i) aus zum Rücksetzzeitpunkt tk sichtbaren Satelliten, der Elementarkorrelationen zwischen dem tatsächlichen GNSS-Signal, das an der Position P(i) zum Zeitpunkt tk vom GNSS-Empfänger empfangen wird, und der GNSS-Repliken, die zum Zeitpunkt tk an der Position Pi von den von dem Peilsender Be(i) zum Zeitpunkt tk aus sichtbaren Satelliten Sat(i, j, k) erwartet werden, sind.

**13.** Vorrichtung zum punktuellen Lokalisieren eines Fahrzeugs nach Anspruch 12, wobei der elektronische Rechner (186) dafür konfiguriert ist, den zeitlichen Synchronisationsungenauigkeitsbereich durch Einschließen von diesem in die Zeitkorrelationsdomäne einer Codesequenz PRN GNSS oder durch Berechnen eines Unverfälschtheitsschutzzeitradius anhand der Zeitdaten einer RAIM-Funktion zu bestimmen, wobei die RAIM-Funktion in dem GNSS-Empfänger integriert ist oder sich extern von diesem befindet.

**14.** System zum punktuellen Lokalisieren eines auf einem Abstellgleis von einem Satz von Abstellgleisen angehaltenen Fahrzeugs mit Hilfe von virtuellen Peilsendern, umfassend:

- ein GNSS-System zur globalen Geopositionierung durch Satelliten (172), und

- eine Vorrichtung (174) zum punktuellen Lokalisieren eines Fahrzeugs (154), nach einem der Ansprüche 12 und 13, vorzugsweise erweitert um eine RAIM-Funktion, die innerhalb des GNSS-Empfängers oder eines zweiten GNSS-Empfängers, getrennt vom ersten GNSS-Empfänger, implementiert ist;

wobei das Fahrzeug (154) Folgendes ist:

- ein Landfahrzeug, das auf einem Abstellgleis auf Land abgestellt ist, vorzugsweise ein auf einem Eisenbahnabstellgleis abgestellter Zug, oder
- ein Wasserfahrzeug, das auf einem Wasserweg abgestellt ist.

15. Computerprogrammprodukt, umfassend von einem Computer lesbare Anweisungen, die bei Ausführung auf einem Prozessor den Prozessor veranlassen, das Verfahren zum punktuellen Lokalisieren eines auf einem Abstellgleis von einem Satz von Abstellgleisen angehaltenen Fahrzeugs mit Hilfe von virtuellen Peilsendern auszuführen, nach einem der Ansprüche 1 bis 11.

**Claims**

1. A method for determining the point location of a vehicle stopped on a holding track among a set of holding tracks, using virtual beacons, the location-determining method being implemented by a system for determining a point location, comprising:

- a GNSS receiver (182), located on board the vehicle (154), able to directly measure pseudo-distances aligned with a synchronised local time base in a synchronisation imprecision time range, using geo-positioning signals emitted by GNSS geo-positioning satellites visible to said GNSS receiver; and
- an electronic processing unit (186) that is external to or integrated into the GNSS receiver, the method for determining a point location comprising a set (204) of steps in which:
- the likelihood of several hypotheses as to the determination of the stopped location of the vehicle (154), corresponding to a first set of an integer number NBe of predetermined virtual beacons Be(i), i varying from 1 to NBe, the respective positions of which are known in an amount of at least one virtual beacon per holding track, is determined (208, 210; 314, 316, 318; 358, 360, 362) and compared (212) by the electronic unit by correlating GNSS geo-positioning signals, received at various instants of a second set by the GNSS receiver (182) located on board the vehicle (154), with predicted GNSS geo-positioning signals of replicas expected for said various positions of the virtual beacons Be(i) of the first set at the various instants,

- the detected holding position of the vehicle (154) is that which corresponds to the maximum likelihood;

and wherein, to decrease maladjustment due to a poor synchronisation of the local time reference of the GNSS receiver (182) with respect to the time of the GNSS global positioning system, a coverage of the imprecision time range of the synchronisation of the local clock is ensured by the electronic unit (186) by dividing in a predetermined way said imprecision time range into time segments, respectively represented by synchronization reset instants or times tk, k varying from 1 to Nk, with Nk referring to the number of synchronisation reset instants in the imprecision time range, the correlations of the GNSS geo-positioning signals received by the on-board GNSS receiver (182) being performed at said synchronisation reset times tk.

2. The method for determining the point location of a vehicle according to claim 1, wherein the correlations of the GNSS geo-positioning signals received by the on-board GNSS receiver (182) for the various positions P(i) of the virtual beacons Be(i), i varying from 1 to NBe, and at the various instants tk, k varying from 1 to Nk, are multi-satellite correlations with the corresponding replica GNSS signals expected for each position P(i) at the instant tk and from the satellites Sat(i, j, k) visible from said position P(i) of the virtual beacon Be(i) at the instant tk, the multi-satellite correlation for the position P(i) at the synchronisation reset instant tk, i varying from 1 to NBe and k varying from 1 to Nk, being equal to the quadratic sum, for all of the satellites visible from the position P(i) at the reset instant tk, of the elementary correlations between the actual GNSS signal received for the position P(i) at the instant tk by the GNSS receiver and the GNSS replicas expected at the instant tk at the position Pi from the satellites Sat(i, j, k) visible from the beacon Be(i) at the instant tk.

3. The method for determining the point location of a vehicle according to claim 1, wherein the set (204) of the steps comprises an initialisation phase, a phase of searching for the position of the virtual beacon closest to the holding position of the vehicle by following a predetermined strategy, and a phase of exploiting the searching phase, in which phase the holding track Vi0 is identified based on the virtual beacon B(ei0) estimated to be closest to the vehicle, and *a priori* knowledge of the positions P(i) of the virtual beacons Be(i), which positions are set and predetermined, i varying from 1 to NBe.

4.  The method for determining the point location of a vehicle according to claim 3, wherein the initialisation phase of the set (204) of the steps contains a first initialisation step (206) during which the first set of the possible positions P(i) of the virtual beacons Be(i), i varying from 1 to NBe, corresponding to the possible holding tracks Vi of the vehicle, is determined based on a topographical database, which may be external to the GNSS receiver or may be included in a base memory of the GNSS receiver, and synchronisation reset times tk, k varying from 1 to Nk, forming a second set of hypotheses, are determined in the synchronisation imprecision time range by being substantially regularly spaced apart, Nk being an integer higher than or equal to 3, the synchronisation imprecision time range being included in the temporal correlation domain of a GNSS PRN code sequence or being determined using an integrity-protection time radius computed based on the time data of an RAIM function, which is integrated into or external to the GNSS receiver.

5.  The method for determining the point location of a vehicle according to claim 4, wherein the difference between the actual position of the GNSS receiver (182) along the holding track on which the vehicle (154) is held and the position of the associated virtual beacon is smaller than an imprecision spatial interval the equivalent temporal effect of which on the temporal correlation precision is clearly lower than the temporal correlation domain of the GNSS PRN code sequence used.

6.  The method for determining the point location of a vehicle according to one of claims 4 and 5, wherein the phase of searching for the closest virtual beacon contains a second step (208) during which:

    - the on-board GNSS receiver (182) receives the actual GNSS signals at the synchronisation reset instants tk, k varying from 1 to Nk, and
    - the electronic unit (186) determines, for each synchronisation reset instant tk of the second set of hypotheses, k varying from 1 to Nk, and for each possible position P(i) of a virtual beacon Be(i) of the first set, i varying from 1 to NBe, of the first set the GNSS replica signals expected by the GNSS receiver at the positions P(i) and at the times tk for each visible satellite Sat(i, j, k) at the local time tk of the receiver, i varying from 1 to NBe and k varying from 1 to Nk; then
    - for each reset instant tk of the second set and for each position P(i) of the virtual beacons of the first set, the electronic unit (186) determines elementary correlations between, on the one hand, the signals of the GNSS replicas expected at the various holding positions P(i) and various synchronization reset times tk and from the various satellites visible at each instant tk and the actual GNSS signals received at the synchronization reset instants tk by the GNSS receiver (182) on board the vehicle.

7.  The method for determining the point location of a vehicle according to claim 6, wherein the phase of searching for the virtual beacon closest to the vehicle comprises a third step (210), executed after or in parallel with the second step (208), during which, for each reset instant tk of the second set and for and for each position P(i) of the virtual beacons of the first set, the electronic unit (186) determines multi-satellite correlations, forming a value of the likelihood function, and equal, for each position P(i) of the virtual beacons of the first set and each reset instant tk of the second set, to the quadratic sum of the elementary correlations between the signal between the GNSS signal received by the GNSS receiver at the instant tk and the signals of the replicas expected, at the instant tk for the position P(i) of the virtual beacon, from the visible satellites Sat(i, j, k) visible from the position P(i) at the instant tk.

8.  The method for determining the point location of a vehicle according to claim 7, wherein the phase of searching for the closest virtual beacon contains a fourth step (212), executed after the third step (210), during which the electronic unit (186) determines the position P(i0) of the virtual beacon and the reset time tk0 that maximises the likelihood function for the first set of the positions P(i) and the second set of the reset times tk, the position P(i0) thus determined being the position of the virtual beacon Be(i0) detected to be closest to the on-board receiver.

9.  The method for determining the point location of a vehicle according to claim 8, further comprising a fifth step (214), executed after the fourth step (212), in which:

    - the electronic unit (186) identifies the holding track on which the vehicle is stopped based on the position P(i0) of the virtual beacon detected to be closest and on a table of correspondence between the set of the virtual beacons and the set of the holding tracks; and/or
    - the electronic unit (186) delivers the piece of information relative to the detected synchronisation reset time tk0 to a mechanism for correcting a drift in the local clock of the GNSS detector; and/or
    - the electronic unit (186) raises an alarm in case of failure to identify the holding track and restarts a scan in a broader temporal synchronisation imprecision domain.

10. The method for determining the point location of a vehicle according to one of claims 6 to 9, wherein, for each virtual-beacon position (Pi), the set of the satellites visible at a given instant tk from all the virtual beacons Be(i), i varying from 1 to NBe, is identical, while being independent of the index i of travel of the virtual beacons and dependent on the time tk only.

11. The method for determining the point location of a vehicle according to one of claims 1 to 10, wherein the integrity of the location determination is checked via an additional step in which it is verified that the maximum likelihood is higher than a predetermined safety threshold guaranteeing the integrity of the location determination.

12. A device for determining the point location of a vehicle stopped on one holding track among a set of holding tracks using virtual beacons, comprising:

- a GNSS receiver (182), located on board the vehicle, able to directly measure pseudo-distances aligned with a synchronised local time base in a precision time range, using geo-positioning signals emitted by GNSS geo-positioning satellites visible to said receiver; and
- an electronic processing unit (186) that is external to or integrated into the GNSS receiver, the device for determining a point location being **characterised in that**
the electronic unit (186) is configured to:

- determine and compare the likelihood of several hypotheses as to the determination of the stopped location of the vehicle, corresponding to a first set of an integer number NBe predetermined virtual beacons Be(i), i varying from 1 to NBe, the respective positions of which are known in an amount of at least one virtual beacon per holding track, by correlating GNSS geo-positioning signals received at various instants of a second set by the GNSS receiver located on board the vehicle with predicted GNSS geo-positioning signals of replicas expected for said various positions of the virtual beacons of the first set at the various instants; and
- detect the current holding position of the vehicle as that corresponding to the maximum likelihood;

wherein, to decrease the maladjustment due to a poor synchronisation of the local time reference of the GNSS receiver with respect to the time of the GNSS global positioning system:

- the electronic unit (186) is configured to ensure coverage of the imprecision time range of the local clock by dividing, in a predetermined way, said imprecision time range into time segments, respectively represented by synchronisation reset times or instants tk, k varying from 1 to Nk, with Nk referring to the number of synchronisation reset instants in the imprecision time range, the correlations of the GNSS geo-positioning signals received by the on-board GNSS receiver being performed at said synchronisation reset times tk; and
- the correlations of the GNSS geo-positioning signals received by the on-board GNSS receiver (182) for the various positions P(i) of the virtual beacons Be(i), i varying from 1 to NBe, and at the various instants tk, k varying from 1 to Nk, are multi-satellite correlations with the corresponding replica GNSS signals expected for each position P(i) at the instant tk and from the satellites Sat(i, j, k) visible from said position P(i) of the virtual beacon Be(i) at the instant tk, the multi-satellite correlation for the position P(i) at the synchronisation reset instant tk, i varying from 1 to NBe and k varying from 1 to Nk, being equal to the quadratic sum, for the set of the satellites visible from the position P(i) at the reset instant tk, of the elementary correlations between the actual GNSS signal received for the position P(i) at the instant tk by the GNSS receiver and the GNSS replicas expected at the instant tk at the position Pi from the satellites Sat(i, j, k) visible from the beacon Be(i) at the instant tk.

13. The device for determining the point location of a vehicle according to claim 12, wherein the electronic unit (186) is configured to determine the synchronisation imprecision time range by including it in the temporal correlation domain of a GNSS PRN code sequence or by computing an integrity-protection time radius based on the time data of an RAIM function, the RAIM function being integrated into or external to the GNSS receiver.

14. A system for determining the point location of a vehicle stopped on one holding track among a set of holding tracks, using virtual beacons, comprising:

- a GNSS global satellite geo-positioning system (172), and
- a device (174) for determining the point location of a vehicle (154) according to one of claims 12 and 13, preferably enhanced by an RAIM function implemented within the GNSS receiver or within a second GNSS receiver separate from the first GNSS receiver;

the vehicle (154) being:

- a land vehicle, held on a land holding track, preferably a train held on a railroad holding track, or
- a sea vehicle, held on a seaway.

15. A computer-program product comprising computer-readable instructions which, when executed on a processor, cause the processor to execute the method for determining the point location of a vehicle stopped on a holding track among a set of holding tracks, using virtual beacons, according to one of claims 1 to 11.

FIG.1

FIG.2

202

FIG.3

FIG.4

FIG.5

Calcul des phases de code (Pd(j,i,tk)) des signaux satellites visibles pour la position [$P_i$] de la balise virtuelle Be(i) à l'instant tk

NCO_code_satellite_1

NCO_code_satellite_j

NCO_code_satellite_Nj

FIG.6

FIG.7

**EP 3 751 315 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5375059 A
- EP 3306272 A1